# EUROPÄISCHE PATENTSCHRIFT

(11) **EP 3 178 864 B1**
(45) Veröffentlichungstag und Bekanntmachung des Hinweises auf die Patenterteilung: **12.09.2018**
(21) Anmeldenummer: 15198679.1
(22) Anmeldetag: 09.12.2015
(51) Int. Cl.: C08G 63/668, C09D 151/08, C08J 7/04

(54) **CARBOXYFUNKTIONELLE POLYETHER-BASIERTE REAKTIONSPRODUKTE UND WÄSSRIGE BASISLACKE ENTHALTEND DIE REAKTIONSPRODUKTE**
CARBOXYFUNCTIONAL POLYETHER BASED REACTION PRODUCTS AND AQUEOUS BASE PAINTS CONTAINING THE REACTION PRODUCTS
PRODUITS DE REACTION A BASE DE POLYETHER A FONCTION CARBOXY ET APPRET EN BASE AQUEUSE CONTENANT LES PRODUITS DE REACTION

(43) Veröffentlichungstag der Anmeldung: 14.06.2017
(73) Patentinhaber: BASF Coatings GmbH, 48165 Münster (DE)
(72) Erfinder: Steinmetz, Bernhard, 97535 Rütschenhausen (DE); Hoffmann, Peter, 48308 Senden (DE); Reuter, Hardy, 48167 Münster (DE)
(74) Vertreter: BASF IP Association

(56) Entgegenhaltungen:
- EP-B1- 1 454 971
- WO-A1-2006/091556

## Beschreibung

Die vorliegende Erfindung betrifft neuartige carboxyfunktionelle Polyether-basierte Reaktionsprodukte. Sie betrifft ferner wässrige Basislacke, welche die Reaktionsprodukte enthalten sowie die Verwendung der besagten Reaktionsprodukte in wässrigen Basislacken. Sie betrifft auch ein Verfahren zur Herstellung von Mehrschichtlackierungen unter Einsatz von wässrigen Basislacken sowie die mit Hilfe des besagten Verfahrens herstellbaren Mehrschichtlackierungen.

### Stand der Technik

Bekannt ist eine Vielzahl von Verfahren zur Herstellung von farb- und/oder effektgebenden mehrschichtigen Lackierungen (auch genannt Mehrschichtbeschichtungen oder Mehrschichtlackierungen). Aus dem Stand der Technik (vergleiche beispielsweise die deutsche Patentanmeldung DE 199 48 004 A1, Seite 17, Zeile 37, bis Seite 19, Zeile 22, oder das deutsche Patent DE 100 43 405 C1, Spalte 3, Absatz [0018], und Spalte 8, Absatz [0052], bis Spalte 9, Absatz [0057], in Verbindung mit Spalte 6, Absatz [0039], bis Spalte 8, Absatz [0050]) ist beispielsweise das folgende Verfahren bekannt, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird.

Dieses Verfahren wird beispielsweise in großem Umfang sowohl für die Erstlackierung (OEM) von Automobilen sowie der Lackierung von Metall- und Kunststoffanbauteilen eingesetzt. Die heutigen Anforderungen an die anwendungstechnologischen Eigenschaften solcher Lackierungen (Beschichtungen) sind enorm.

Ein immer wieder auftretendes und vom Stand der Technik nach wie vor nicht völlig zufriedenstellend gelöstes Problem ist das Auftreten von Haftungsproblemen bei den hergestellten Mehrschichtlackierungen. Insbesondere hinsichtlich der Haftung zwischen Basislackschicht und der vom Substrat aus betrachtet darunter angeordneten Beschichtung sowie der Haftung zwischen Basislackschicht und Klarlackschicht treten häufiger Probleme auf. Die Haftungsproblematik ist insbesondere dann eklatant, wenn die beschichteten Substrate der Witterung ausgesetzt sind. Eine schlechte Haftung manifestiert sich im Falle einer Belastung durch Witterung besonders auch im Auftreten von Blasen und Quellungen. Insbesondere im Zusammenhang mit der Reparaturlackierung können hier Probleme entstehen. Ein ebenfalls immer wieder auftretendes Problem ist die oft nicht ausreichende mechanische Stabilität, insbesondere gegen Steinschlageinflüsse.

Die Eigenschaften des in diesem Zusammenhang besonders wichtigen Basislacks und den daraus hergestellten Lackschichten werden insbesondere von den im Basislack enthaltenen Bindemitteln und Additiven, beispielsweise speziellen Reaktionsprodukten, bestimmt.

Hinzu kommt, dass heutzutage der Ersatz von Beschichtungsmitteln auf Basis organischer Lösemittel durch wässrige Beschichtungsmittel immer wichtiger wird, um den steigenden Anforderungen an die Umweltverträglichkeit Rechnung zu tragen.

Die EP 1 454 971 B1 offenbart Polyesterpolyole, welche durch Umsetzung mindestens einer Polycarbonsäure und mindestens einer OH-Verbindung erhältlich sind. Mindestens 45 mol-% der eingesetzten Polycarbonsäure bestehen dabei aus Trimellitsäureanhydrid. Die OH-Verbindung hat ein mittleres Molekulargewicht von mindestens 210 g/mol und bevorzugt ein mittleres Molekulargewicht von nicht mehr als 650 g/mol. Besonders bevorzugt wird Polytetrahydrofuran mit einem zahlenmittleren Molekulargewicht von 250 g/mol als OH-Verbindung eingesetzt. Das Polyesterpolyol findet Anwendung zur Verbesserung der technologischen, insbesondere ästhetischen Eigenschaften von Mehrschichtlackierungen und wird in Basislacken eingesetzt.

Die WO 2006/091556 A1 offenbart in Beispiel 1 einen Polyester mit einer Säurezahl von 5.5 mg KOH/g, hergestellt durch Umsetzung von 1 mol Trimellitsäureanhydrid und 3 mol eines Polytetramethylenglykol mit einem Molekulargewicht von 650 g/mol.

### Aufgabe

Der vorliegenden Erfindung lag also die Aufgabe zugrunde, ein Reaktionsprodukt zur Verfügung zu stellen, mit dessen Hilfe sich Beschichtungen herstellen lassen, die die oben bezeichneten Nachteile des Standes der Technik nicht länger aufweisen. Insbesondere sollte durch die Bereitstellung eines neuen Reaktionsprodukts und dessen Einsatz in wässrigen Basislacken die Möglichkeit geschaffen werden, Beschichtungen bereitzustellen, die hervorragende Haftungseigenschaften und eine sehr gute Steinschlagbeständigkeit aufweisen und gleichzeitig durch den Einsatz von eben wässrigen Basislacken auf umweltschonende Weise hergestellt werden können.

### Lösung

Die genannten Aufgaben konnten durch einen pigmentierten wässrigen Basislack gelöst werden, welcher ein carboxyfunktionelles Polyether-basiertes Reaktionsprodukt enthält, welches herstellbar ist durch Umsetzung von
(a) mindestens einem Carbonsäureanhydrid enthaltend eine freie Carbonsäuregruppe und/oder das Halogenid einer Carbonsäuregruppe mit
(b) mindestens einem Polyether der allgemeinen Strukturformel (I) 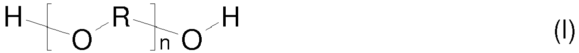 worin
   R ein C₃- bis C₆-Alkylenrest ist und n entsprechend so gewählt ist, dass der Polyether (b) ein zahlenmittleres Molekulargewicht von 800 bis 4000 g/mol besitzt,
   wobei die Komponenten (a) und (b) bei der Umsetzung in einem molaren Verhältnis von 0,7/2,3 bis 1,6/1,7 eingesetzt werden und das resultierende Reaktionsprodukt eine Säurezahl von 5 bis 50 mg KOH/g besitzt.

Die Bedingung, dass n so gewählt wird, dass der besagte Polyether ein zahlenmittleres Molekulargewicht von 800 bis 4000 g/mol besitzt, sei wie folgt veranschaulicht. Handelt es sich beispielsweise bei R um einen Tetramethylenrest und soll das zahlenmittlere Molekulargewicht 1000 g/mol betragen, so liegt n im Mittel zwischen 13 und 14. Anhand der gegebenen Vorgaben weiß der Fachmann problemlos, ein entsprechendes Reaktionsprodukt herzustellen beziehungsweise auszuwählen. Davon abgesehen geben die weiter unten folgende Beschreibung und insbesondere die Beispiele nochmals zusätzliche Informationen. Der Parameter n ist also genauso wie das zahlenmittlere Molekulargewicht als ein statistischer Mittelwert zu verstehen.

Der neue Basislack wird in der Folge auch als erfindungsgemäßer Basislack bezeichnet. Bevorzugte Ausführungsformen des erfindungsgemäßen Basislacks gehen aus der folgenden Beschreibung sowie den Unteransprüchen hervor.

Ebenfalls Gegenstand der vorliegenden Erfindung ist das Reaktionsprodukt an sich sowie die Verwendung des Reaktionsprodukts in wässrigen Basislacken zur Verbesserung der Haftungseigenschaften und Steinschlagbeständigkeit. Nicht zuletzt betrifft die vorliegende Erfindung ein Verfahren zur Herstellung einer mehrschichtigen Lackierung auf einem Substrat sowie eine nach dem genannten Verfahren hergestellte Mehrschichtlackierung.

Durch den Einsatz der erfindungsgemäßen Reaktionsprodukte werden Basislacke erhalten, deren Verwendung bei der Herstellung von Beschichtungen, insbesondere Mehrschichtlackierungen, zu hervorragenden Haftungseigenschaften und einer sehr guten Steinschlagbeständigkeit führt. Das erfindungsgemäße Reaktionsprodukt sowie der erfindungsgemäße Basislack können im Bereich der Erstlackierung, insbesondere dem Bereich der Automobilindustrie, als auch im Bereich der Automobilreparaturlackierung eingesetzt werden.

### Komponente (a)

Das erfindungsgemäße Reaktionsprodukt ist unter Einsatz mindestens eines cyclischen Carbonsäureanhydrids enthaltend eine freie Carbonsäuregruppe (-COOH) und/oder das Halogenid, bevorzugt Chlorid (-COCl), einer Carbonsäuregruppe herstellbar. Vorzugsweise handelt es sich um eine freie Carbonsäuregruppe (COOH).

Bei der Komponente (a) kann es sich um aliphatische, aromatische oder araliphatische (gemischt aliphatisch-aromatische) cyclische Carbonsäureanhydride, die eine freie Carbonsäuregruppe enthalten, handeln. Unter cyclischen Carbonsäureanhydriden sind solche zu verstehen, in denen die Anhydridgruppe in einer Ringstruktur vorhanden ist. Dies ist somit gleichbedeutend damit, dass bei Reaktion der Anhydridgruppe und entsprechender Öffnung der Anhydridfunktion, beispielsweise bei Reaktion mit einer Hydroxylgruppe und entsprechender Entstehung einer freien Carbonsäuregruppe und einer Estergruppe, das zugrunde liegende Molekül nicht in zwei Moleküle zerfällt, sondern auch nach der Reaktion lediglich ein Molekül besteht.

Bevorzugt sind aromatische Carbonsäureanhydride, die eine freie Carbonsäuregruppe enthalten. Dabei handelt es sich also um Verbindungen, die abgesehen von der freien Carbonsäuregruppe und der Anhydridgruppe lediglich aus aromatischen Struktureinheiten bestehen. Ganz besonders bevorzugt ist Trimellitsäureanhydrid.

### Komponente (b)

Die Herstellung der erfindungsgemäßen Reaktionsprodukte kann unter Einsatz mindestens eines Polyethers der allgemeinen Strukturformel (I) 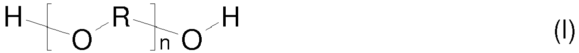 erfolgen, wobei es sich bei R um einen C₃ bis C₆-Alkylrest handelt. Der Index n ist jeweils so zu wählen, dass der besagte Polyether ein zahlenmittleres Molekulargewicht von 800 bis 4000 g/mol besitzt. Bevorzugt besitzt er ein zahlenmittleres Molekulargewicht von 950 bis 3800 g/mol, besonders bevorzugt von 1050 bis 3600 g/mol, insbesondere von 1200 bis 3400 g/mol und ganz besonders bevorzugt 1500 bis 3200 g/mol. Nochmals bevorzugt ist ein Bereich von 1600 bis 3000 g/mol, insbesondere 1800 bis 2200 g/mol. Beispielsweise kann das zahlenmittlere Molekulargewicht bei 1000 g/mol, 2000 g/mol oder 3000 g/mol liegen.

Das zahlenmittlere Molekulargewicht wird im Rahmen der vorliegenden Erfindung, sofern nicht spezifisch anders angegeben, mittels Dampfdruckosmose bestimmt. Gemessen wurde im Rahmen der vorliegenden Erfindung mittels eines Dampfdruckosmometers (Modell 10.00, Fa. Knauer) an Konzentrationsreihen der zu untersuchenden Komponente in Toluol bei 50°C mit Benzophenon als Eichsubstanz zur Bestimmung der experimentellen Eichkonstante des eingesetzten Messgeräts (nach E. Schröder, G. Müller, K.-F. Arndt, "Leitfaden der Polymercharakterisierung", Akademie-Verlag, Berlin, S. 47 - 54, 1982, wobei darin Benzil als Eichsubstanz eingesetzt wurde).

Bekanntermaßen und wie bereits weiter oben erläutert, handelt es sich bei dem zahlenmittleren Molekulargewicht immer um einen statistischen Mittelwert. Selbiges muss also auch für den Parameter n gemäß Formel (I) gelten. Die in diesem Zusammenhang zu erläuternde, für die Komponente (b) gewählte Bezeichnung Polyether versteht sich wie folgt. Bei Polymeren, beispielsweise Polyethern (b), handelt es sich immer um Mischungen von verschieden großen Molekülen. Zumindest ein Teil oder alle dieser Moleküle zeichnen sich durch eine Abfolge von gleichen oder verschiedenen Monomereinheiten (als reagierte Form von Monomeren) aus. Das Polymer beziehungsweise Molekülgemisch enthält also grundsätzlich Moleküle, die mehrere (das heißt mindestens zwei) gleiche oder verschiedene Monomereinheiten enthalten. Selbstverständlich können in dem Gemisch auch anteilig die Monomere selbst enthalten sein, das heißt also in ihrer nicht reagierten Form. Dies bedingt bekanntermaßen allein die in der Regel molekular nicht einheitlich ablaufende Herstellungsreaktion, das heißt Polymerisation von Monomeren. Während einem bestimmten Monomer ein diskretes Molekulargewicht zuzuordnen ist, ist ein Polymer also immer eine Mischung von Molekülen, die sich in ihrem Molekulargewicht unterscheiden. Ein Polymer kann daher nicht durch ein diskretes Molekulargewicht beschrieben werden, sondern ihm werden bekanntermaßen immer mittlere Molekulargewichte, beispielsweise das oben genannte zahlenmittlere Molekulargewicht, zugeordnet.

In dem erfindungsgemäß einzusetzenden Polyether können alle n Reste R gleich sein. Ebenso ist es aber auch möglich, dass unterschiedliche Arten von Resten R vorhanden sind. Bevorzugt sind alle Reste R gleich.

Bei R handelt es sich bevorzugt um einen C₄-Alkylenrest. Besonders bevorzugt handelt es sich um einen Tetramethylenrest.

Ganz besonders bevorzugt handelt es sich bei dem erfindungsgemäß einzusetzenden Polyether um ein im Mittel diolisches, lineares Polytetrahydrofuran.

### Das Reaktionsprodukt

Die Herstellung des Reaktionsproduktes weist keine Besonderheiten auf. Die Komponenten (a) und (b) werden über allgemein bekannte Kondensations- und/oder Additionsreaktionen von Hydroxylgruppen mit Carbonsäureanhydriden und Carbonsäuren miteinander verknüpft. Die Umsetzung kann beispielsweise in Masse oder in Lösung mit typischen organischen Lösemitteln bei Temperaturen von beispielsweise 100°C bis 300°C erfolgen. Selbstverständlich können auch typische Katalysatoren wie Schwefelsäure, Sulfonsäuren und/oder Tetraalkyltitanate, Zinkbeziehungsweise Zinnalkoxylate, Dialkylzinnoxide wie beispielsweise Di-n-butylzinnoxid oder organische Salze der Dialkylzinnoxide zum Einsatz kommen. Üblicherweise erfolgt zumindest bei Kondensationsreaktionen zudem der Einsatz eines Wasserabscheiders zum Auffangen des anfallenden Wassers. Zu beachten ist selbstverständlich, dass ein carboxyfunktionelles Reaktionsprodukt zu entstehen hat. Da die Komponente (b) im Überschuss eingesetzt wird, ist darauf zu achten, dass die jeweils gewünschte Menge an Carboxylgruppen im entstehenden Produkt verbleibt. Dies kann vom Fachmann problemlos dadurch erreicht werden, dass die Säurezahl im Verlauf der Reaktion durch entsprechende Messungen kontrolliert wird und nach Erreichen der gewünschten Säurezahl die Umsetzung abgebrochen wird, beispielsweise durch Abkühlen auf eine Temperatur, bei der keine Reaktion mehr stattfinden kann.

Dabei werden die Komponenten (a) und (b) in einem molaren Verhältnis von 0,7/2,3 bis 1,6/1,7 bevorzugt von 0,8/2,2 bis 1,6/1,8 und ganz besonders bevorzugt von 0,9/2,1 bis 1,5/1,8 eingesetzt. Ein nochmals besonders bevorzugter Verhältnisbereich ist von 0,45/1 bis 0,55/1.

Das Reaktionsprodukt ist carboxyfunktionell. Die Säurezahl des Reaktionsprodukts liegt von 5 bis 50 mg KOH/g, bevorzugt 8 bis 40 mg KOH/g, insbesondere bevorzugt 10 bis 35 mg KOH/g und ganz besonders bevorzugt 12 bis 30 mg KOH/g. Die Säurezahl wird gemäß DIN 53402 bestimmt und bezieht sich selbstverständlich jeweils auf das Produkt an sich (und nicht auf die Säurezahl einer gegebenenfalls vorliegenden Lösung oder Dispersion des Produktes in einem Lösemittel). Wird im Rahmen der vorliegenden Erfindung auf eine offizielle Norm verwiesen, ist hiermit selbstverständlich die zum Anmeldetag geltende Fassung der Norm oder, falls zu diesem Zeitpunkt keine geltende Fassung besteht, die letzte geltende Fassung gemeint.

Das resultierende Reaktionsprodukt besitzt bevorzugt ein zahlenmittleres Molekulargewicht von 1500 bis 15000 g/mol, bevorzugt von 2000 bis 10000 g/mol und ganz besonderes bevorzugt von 2200 bis 8000 g/mol.

Das erfindungsgemäße Reaktionsprodukt ist in der Regel hydroxyfunktionell, bevorzugt im Mittel dihydroxyfunktionell. Bevorzugt besitzt es also sowohl Hydroxylals auch Carboxyfunktionen.

Für ganz besonders bevorzugte Reaktionsprodukte gilt, dass sie herstellbar sind durch Umsetzung von (a) Trimellitsäureanhydrid mit (b) einem diolischen, linearen Polytetrahydrofuran mit einem zahlenmittleren Molekulargewicht von 1500 bis 3200 g/mol, die Komponenten (a) und (b) in einem molaren Verhältnis von 0,45/1 bis 0,55/1 eingesetzt werden und die Reaktionsprodukte eine Säurezahl von 8 bis 40 mg KOH/g sowie ein zahlenmittleres Molekulargewicht von 2000 bis 10000 g/mol aufweisen.

### Der pigmentierte wässrige Basislack

Die vorliegende Erfindung betrifft ferner einen pigmentierten wässrigen Basislack, welcher mindestens ein erfindungsgemäßes Reaktionsprodukt enthält. Alle oben genannten bevorzugten Ausführungsformen hinsichtlich des Reaktionsprodukts gelten selbstverständlich auch in Bezug auf den Basislack enthaltend das Reaktionsprodukt.

Unter einem Basislack ist ein in der Automobillackierung und allgemeinen Industrielackierung eingesetzter farbgebender Zwischenbeschichtungsstoff zu verstehen. Dieser wird im Allgemeinen auf einem mit einem eingebrannten (vollständig gehärteten) Füller oder Grundierfüller vorbehandelten Metall- oder Kunststoffuntergrund, mitunter auch direkt auf dem Kunststoffuntergrund aufgebracht. Auch Altlackierungen, welche gegebenenfalls noch vorbehandelt werden müssen (beispielsweise durch Anschleifen), können als Untergründe dienen. Mittlerweile ist es durchaus üblich, mehr als eine Basislackschicht aufzutragen. Dementsprechend stellt in einem solchen Fall eine erste Basislackschicht den Untergrund für eine zweite dar. Möglich ist dabei insbesondere, anstatt einer Applikation auf eine Schicht eines eingebrannten Füllers den ersten Basislack direkt auf ein mit einer gehärteten Elektrotauschlackschicht versehendes Metallsubstrat zu applizieren und den zweiten Basislack direkt auf die erste Basislackschicht zu applizieren, ohne das letztere separat gehärtet wird. Um eine Basislackschicht beziehungsweise die oberste Basislackschicht insbesondere gegen Umwelteinflüsse zu schützen, wird auf dieser mindestens noch eine zusätzliche Klarlackschicht appliziert. Dies erfolgt in der Regel im nass-in-nass-Verfahren, das heißt der Klarlack wird appliziert, ohne dass die Basislackschicht(en) gehärtet wird(werden). Die Härtung erfolgt dann abschließend gemeinsam. Verbreitet ist inzwischen auch, nur eine Basislackschicht auf einer gehärteten Elektrotauschlackschicht herzustellen, dann einen Klarlack zu applizieren und diese beiden Schichten dann gemeinsam zu härten. Letzteres ist im Rahmen der vorliegenden Erfindung eine bevorzugte Ausführung. Es hat sich nämlich gezeigt, dass bei Einsatz des erfindungsgemäßen Reaktionsprodukts trotz der Herstellung von nur einer Basislackschicht und einer damit gegebenen deutlichen Prozessvereinfachung eine ausgezeichnete Haftung sowie Steinschlagbeständigkeit resultiert.

Die Summe über die gewichtsprozentualen Anteile, bezogen auf das Gesamtgewicht des pigmentierten wässrigen Basislacks, aller erfindungsgemäßen Reaktionsprodukte beträgt bevorzugt 0,1 bis 20 Gew.-%, besonders bevorzugt 0,5 bis 15 Gew.-% und ganz besonders bevorzugt 1,0 bis 10 Gew.-% oder sogar 1,5 bis 5 Gew.-%.

Liegt der Gehalt des erfindungsgemäßen Reaktionsprodukts unter 0,1 Gew.-% so ist es gegebenenfalls möglich, dass keine Verbesserung hinsichtlich Haftung und Steinschlagbeständigkeit mehr erzielt wird. Liegt der Gehalt bei mehr als 20 Gew.-% so können unter Umständen aufgrund der dann zahlreichen potentiell anionischen Gruppen (Carboxylatgruppen) des Reaktionsprodukts Nachteile hinsichtlich der Schwitzwasserbeständigkeit der aus dem Basislack hergestellten Lackierung auftreten.

Im Falle einer möglichen Spezifizierung auf Basislacke enthaltend bevorzugte Reaktionsprodukte in einem speziellen Anteilsbereich gilt folgendes. Die Reaktionsprodukte, die nicht in die bevorzugte Gruppe fallen, können selbstverständlich weiterhin im Basislack enthalten sein. Der spezielle Anteilsbereich gilt dann nur für die bevorzugte Gruppe von Reaktionsprodukten. Bevorzugt ist allerdings, dass für den Gesamtanteil von Reaktionsprodukten bestehend aus Reaktionsprodukten aus der bevorzugten Gruppe und Reaktionsprodukten, die nicht in die bevorzugte Gruppe fallen, ebenfalls der spezielle Anteilsbereich gilt.

Würde also eine Beschränkung auf einen Anteilsbereich von 0,5 bis 15 Gew.-% und eine bevorzugte Gruppe von Reaktionsprodukten durchgeführt werden, so gilt dieser Anteilsbereich augenscheinlich zunächst nur für die bevorzugte Gruppe an Reaktionsprodukten. Bevorzugt wäre dann aber, dass insgesamt von allen ursprünglich umfassten Reaktionsprodukten bestehend aus Reaktionsprodukten aus der bevorzugten Gruppe und Reaktionsprodukten, die nicht in die bevorzugte Gruppe fallen, ebenfalls von 0,5 bis 15 Gew.-% enthalten sind. Werden also 5 Gew.-% von Reaktionsprodukten der bevorzugten Gruppe eingesetzt, so können höchstens 10 Gew.-% der Reaktionsprodukte der nicht bevorzugten Gruppe eingesetzt werden.

Das genannte Prinzip gilt im Rahmen der vorliegenden Erfindung für alle genannten Komponenten des Basislacks und deren Anteilsbereiche, beispielsweise die Pigmente, die Polyurethanharze als Bindemittel oder auch die Vernetzungsmittel wie Melaminharze.

Die erfindungsgemäß eingesetzten Basislacke enthalten farb- und/oder effektgebende Pigmente. Solche Farbpigmente und Effektpigmente sind dem Fachmann bekannt und werden beispielsweise in Römpp-Lexikon Lacke und Druckfarben, Georg Thieme Verlag, Stuttgart, New York, 1998, Seite 176 und 451, beschrieben. Der Anteil der Pigmente kann beispielsweise im Bereich von 1 bis 40 Gew.-%, bevorzugt 2 bis 35 Gew.-%, besonders bevorzugt 3 bis 30 Gew.-%, bezogen auf das Gesamtgewicht des pigmentierten wässrigen Basislacks, liegen.

Im Rahmen der vorliegenden Erfindung sind Basislacke bevorzugt, die als Bindemittel physikalisch, thermisch oder thermisch und mit aktinischer Strahlung härtbare Polymere enthalten. Als Bindemittel wird im Rahmen der vorliegenden Erfindung gemäß einschlägiger DIN EN ISO 4618 der nichtflüchtige Anteil eines Beschichtungsmittels ohne Pigmente und Füllstoffe verstanden. Spezielle Bindemittel sind demnach beispielsweise auch lacktypische Additive, das erfindungsgemäße Reaktionsprodukt oder weiter unten beschriebene typische Vernetzungsmittel, auch wenn der Ausdruck im Folgenden hauptsächlich in Bezug auf bestimmte physikalisch, thermisch oder thermisch und mit aktinischer Strahlung härtbare Polymere, beispielsweise bestimmte Polyurethanharze, verwendet wird.

Neben dem erfindungsgemäßen Reaktionsprodukt enthalten die erfindungsgemäßen pigmentierten wässrigen Basislacke besonders bevorzugt mindestens ein weiteres, vom Reaktionsprodukt verschiedenes Polymer als Bindemittel, insbesondere mindestens ein Polymer ausgewählt aus der Gruppe bestehend aus Polyurethanen, Polyestern, Poly(meth)acrylaten und/oder Mischpolymerisaten der genannten Polymere, insbesondere bevorzugt jedenfalls, aber nicht zwingend ausschließlich, mindestens ein Polyurethan-Poly(meth)acrylat.

Im Rahmen der vorliegenden Erfindung bedeutet der Begriff "physikalische Härtung" die Bildung eines Films durch Abgabe von Lösemittel aus Polymerlösungen oder Polymerdispersionen. Üblicherweise sind hierfür keine Vernetzungsmittel notwendig.

Im Rahmen der vorliegenden Erfindung bedeutet der Begriff "thermische Härtung" die durch Wärme initiierte Vernetzung einer Lackschicht, bei der in dem zugrunde liegenden Lack entweder ein separat vorliegendes Vernetzungsmittel oder aber selbstvernetzende Bindemittel angewandt werden. Das Vernetzungsmittel enthält reaktive funktionelle Gruppen, die zu den in den Bindemitteln vorhandenen reaktiven funktionellen Gruppen komplementär sind. Üblicherweise wird dies von der Fachwelt als Fremdvernetzung bezeichnet. Sind die komplementären reaktiven funktionellen Gruppen oder autoreaktiven funktionellen Gruppen, das heißt Gruppen, die mit Gruppen derselben Art reagieren, bereits in den Bindemittelmolekülen vorhanden, liegen selbstvernetzende Bindemittel vor. Beispiele geeigneter komplementärer reaktiver funktioneller Gruppen und autoreaktiver funktioneller Gruppen sind aus der deutschen Patentanmeldung DE 199 30 665 A1, Seite 7, Zeile 28 bis Seite 9, Zeilen 24 bekannt.

Im Rahmen der vorliegenden Erfindung ist unter aktinischer Strahlung elektromagnetische Strahlung wie nahes Infrarot (NIR), UV-Strahlung, insbesondere UV-Strahlung, und Korpuskularstrahlung wie Elektronenstrahlung zu verstehen. Die Härtung durch UV-Strahlung wird üblicherweise durch radikalische oder kationische Photoinitiatoren initiiert. Werden die thermische Härtung und die Härtung mit aktinischem Licht gemeinsam angewandt, spricht man auch von "Dual Cure".

In der vorliegenden Erfindung sind sowohl Basislacke bevorzugt, die physikalisch, als auch solche die thermisch härtbar sind. Selbstverständlich findet bei Basislacken, die thermisch härtbar sind, immer auch anteilig eine physikalische Härtung statt. Diese Lacke werden aber schon aus Gründen der Übersichtlichkeit als thermisch härtbar bezeichnet.

Als thermisch härtende Basislacke sind solche bevorzugt, die als Bindemittel ein Polyurethanharz und/oder Polyurethan-Poly(meth)acrylat, bevorzugt ein hydroxygruppenhaltiges Polyurethanharz und/oder Polyurethan-Poly(meth)acrylat, und als Vernetzungsmittel ein Aminoplastharz oder ein blockiertes oder unblockiertes Polyisocyanat, bevorzugt ein Aminoplastharz, enthalten. Unter den Aminoplastharzen sind Melaminharze bevorzugt.

Die Summe über die gewichtsprozentualen Anteile, bezogen auf das Gesamtgewicht des pigmentierten wässrigen Basislacks, aller Vernetzungsmittel, bevorzugt Aminoplastharze und/oder blockierte und/oder unblockierte Polyisocyanat, insbesondere bevorzugt Melaminharze, beträgt bevorzugt 1 bis 20 Gew.-%, besonders bevorzugt 1,5 bis 17,5 Gew.-% und ganz besonders bevorzugt 2 bis 15 Gew.-% oder sogar 2,5 bis 10 Gew.-%.

Das bevorzugt enthaltene Polyurethanharz kann ionisch und/oder nicht ionisch hydrophil stabilisiert sein. In bevorzugten Ausführungsformen der vorliegenden Erfindung ist das Polyurethanharz ionisch hydrophil stabilisiert. Die bevorzugten Polyurethanharze sind linear oder enthalten Verzweigungen. Besonders bevorzugt handelt es sich um ein Polyurethanharz, in dessen Gegenwart olefinisch ungesättigte Monomere polymerisiert wurden. Das Polyurethanharz kann dabei neben dem aus der Polymerisation der olefinisch ungesättigten Monomere hervorgegangenen Polymer vorliegen ohne dass diese kovalent miteinander verbunden sind. Ebenso kann das Polyurethanharz aber auch mit dem aus der Polymerisation der olefinisch ungesättigten Monomere hervorgegangenen Polymer kovalent verbunden sein. Bei beiden Gruppen der vorgenannten Harze handelt es sich also um Mischpolymere, die im Falle des Einsatzes von (Meth)acrylatgruppenhaltigen Monomeren als olefinisch ungesättigte Monomere auch Polyurethan-Poly(meth)acrylate (siehe auch weiter oben) genannt werden können. Solche Polyurethan-Poly(meth)acrylate, insbesondere hydroxyfunktionelle Polyurethan-Poly(meth)acrylate, sind im Rahmen der vorliegenden Erfindung besonders bevorzugt einzusetzen. Bei den olefinisch ungesättigten Monomeren handelt es sich also bevorzugt um Acrylat- und/oder Methacrylatgruppenhaltige Monomere. Ebenfalls bevorzugt ist, dass die Acrylat- und/oder Methacrylatgruppenhaltigen Monomere in Kombination mit weiteren olefinisch ungesättigten Verbindungen eingesetzt werden, welche keine Acrylat- oder Methacrylatgruppen enthalten. Besonders bevorzugt werden als olefinisch ungesättigte Monomere Acrylat- oder Methacrylatgruppen-haltige Monomere an das Polyurethanharz kovalent gebunden. Diese Form von Polyurethan-Poly(meth)acrylaten ist nochmals bevorzugt.

Geeignete gesättigte oder ungesättigte Polyurethanharze beziehungsweise Polyurethan-Poly(meth)acrylate werden beispielsweise beschrieben in
- der deutschen Patentanmeldung DE 199 14 896 A1, Spalte 1, Zeilen 29 bis 49 und Spalte 4, Zeile 23 bis Spalte 11, Zeile 5,
- der deutschen Patentanmeldung DE 199 48 004 A1, Seite 4, Zeile 19 bis Seite 13, Zeile 48,
- der europäischen Patentanmeldung EP 0 228 003 A1, Seite 3, Zeile 24 bis Seite 5, Zeile 40,
- der europäischen Patentanmeldung EP 0 634 431 A1, Seite 3, Zeile 38 bis Seite 8, Zeile 9, oder
- der internationalen Patentanmeldung WO 92/15405, Seite 2, Zeile 35 bis Seite 10, Zeile 32, oder
- der deutschen Patentanmeldung DE 44 37 535 A1.

Für die Herstellung des Polyurethanharzes werden vorzugsweise die dem Fachmann bekannten aliphatischen, cycloaliphatischen, aliphatisch-cycloaliphatischen, aromatischen, aliphatisch-aromatischen und/oder cycloaliphatisch-aromatischen Polyisocyanate eingesetzt.

Als Alkohol-Komponente für die Herstellung der Polyurethanharze werden bevorzugt die dem Fachmann bekannten, gesättigten und ungesättigten höhermolekularen und niedermolekularen Polyole sowie gegebenenfalls auch Monoalkohole in untergeordneten Mengen eingesetzt. Als niedermolekulare Polyole werden insbesondere Diole und in untergeordneten Mengen Triole zur Einführung von Verzweigungen eingesetzt. Beispiele geeigneter höhermolekularer Polyole sind gesättigte oder olefinisch ungesättigte Polyesterpolyole und/oder Polyetherpolyole. Insbesondere werden als höhermolekulare Polyole Polyesterpolyole, insbesondere solche mit einem zahlenmittleren Molekulargewicht von 400 bis 5000 g/mol.

Zur hydrophilen Stabilisierung beziehungsweise zur Erhöhung der Dispergierbarkeit in wässrigem Medium kann das bevorzugt enthaltene Polyurethanharz bestimmte ionische Gruppen und/oder Gruppen, die in ionische Gruppen überführt werden können (potentiell ionische Gruppen), enthalten. Solche Polyurethanharze werden im Rahmen der vorliegenden Erfindung als ionisch hydrophil stabilisierte Polyurethanharze bezeichnet. Ebenfalls enthalten sein können nicht ionische hydrophil modifizierende Gruppen. Bevorzugt sind aber die ionisch hydrophil stabilisierten Polyurethane. Genauer handelt es sich bei den modifizierenden Gruppen entweder um
- funktionelle Gruppen, die durch Neutralisationsmittel und/oder Quaternisierungsmittel in Kationen überführt werden können, und/oder kationische Gruppen (kationische Modifizierung)
   oder
- funktionelle Gruppen, die durch Neutralisationsmittel in Anionen überführt werden können, und/oder anionische Gruppen (anionische Modifizierung)
   und/oder
- nicht ionische hydrophile Gruppen (nicht-ionische Modifizierung).

Wie der Fachmann weiß, handelt es sich bei den funktionellen Gruppen zur kationischen Modifizierung um beispielsweise primäre, sekundäre und/oder tertiäre Aminogruppen, sekundäre Sulfidgruppen und/oder tertiäre Phosphingruppen, insbesondere tertiäre Aminogruppen und sekundäre Sulfidgruppen (funktionelle Gruppen, die durch Neutralisationsmittel und/oder Quaternisierungsmittel in kationische Gruppen überführt werden können). Weiterhin zu nennen sind die aus den vorgenannten funktionellen Gruppen unter Einsatz von dem Fachmann bekannten Neutralisationsmitteln und/oder Quaternisierungsmitteln hergestellte kationische Gruppen wie primäre, sekundäre, tertiäre und/oder quaternäre Ammoniumgruppen, tertiäre Sulfoniumgruppen und/oder quaternäre Phosphoniumgruppen, insbesondere quaternäre Ammoniumgruppen und tertiäre Sulfoniumgruppen.

Bei den funktionellen Gruppen zur anionischen Modifizierung handelt es sich bekanntermaßen um beispielsweise Carbonsäure-, Sulfonsäure- und/oder Phosphonsäuregruppen, insbesondere Carbonsäuregruppen (funktionelle Gruppen, die durch Neutralisationsmittel in anionische Gruppen überführt werden können) sowie aus den vorgenannten funktionellen Gruppen unter Einsatz von dem Fachmann bekannten Neutralisationsmittel hergestellte anionische Gruppen wie Carboxylat-, Sulfonat- und/oder Phosphonatgruppen.

Bei den funktionellen Gruppen zur nicht-ionischen hydrophilen Modifizierung handelt es sich vorzugsweise um Poly(oxyalkylen)-Gruppen, insbesondere Poly(oxyethylen)-Gruppen.

Die ionisch hydrophilen Modifizierungen können durch Monomere, welche die (potentiell) ionischen Gruppen enthalten, in das Polyurethanharz eingeführt werden. Die nicht-ionischen Modifizierungen werden beispielsweise durch den Einbau von Poly(ethylen)oxid-Polymeren als laterale oder endständige Gruppen der Polyurethanmoleküle eingeführt. Die hydrophilen Modifizierungen werden beispielsweise über Verbindungen eingeführt, die mindestens eine gegenüber Isocyanatgruppen reaktive Gruppe, vorzugsweise mindestens eine Hydroxygruppe, enthalten. Zur Einführung der ionischen Modifizierung können Monomere eingesetzt werden, die neben den modifizierenden Gruppen mindestens eine Hydroxygruppe enthalten. Zur Einführung der nicht-ionischen Modifizierungen werden bevorzugt die dem Fachmann bekannten Polyetherdiole und/oder Alkoxypoly(oxyalkylen)alkohole eingesetzt.

Wie schon oben angedeutet, kann es sich bei dem Polyurethanharz vorzugsweise um ein mittels olefinisch ungesättigten Monomeren gepfropftes Pfropfpolymer handeln. In diesem Fall ist das Polyurethan also beispielsweise mit Seitengruppen und/oder Seitenketten gepfropft, die auf olefinisch ungesättigten Monomeren basieren. Insbesondere handelt es sich um Seitenketten, die auf Poly(meth)acrylaten basieren, wobei es sich dann um die schon oben beschriebenen Polyurethan-Poly(meth)acrylate handelt. Als Poly(meth)acrylate werden im Rahmen der vorliegenden Erfindung Polymere beziehungsweise polymere Reste bezeichnet, die Acrylat- und/oder Methacrylatgruppen-haltige Monomere umfassen, vorzugsweise aus Acrylat- und/oder Methacrylatgruppen-haltigen Monomeren bestehen. Unter Seitenketten, die auf Poly(meth)acrylaten basieren, sind Seitenketten zu verstehen, die bei der Pfropfpolymerisation unter Einsatz von (Meth)acrylatgruppen-haltigen Monomeren aufgebaut werden. Dabei werden bei der Pfropfpolymerisation vorzugsweise mehr als 50 mol-%, insbesondere mehr als 75 mol-%, insbesondere 100 mol.-%, bezogen auf die Gesamtmenge der bei der Pfropfpolymerisation eingesetzten Monomere, an (Meth)acrylatgruppen-haltigen Monomeren eingesetzt.

Die beschriebenen Seitenketten werden bevorzugt nach der Herstellung einer Polyurethanharz-Primärdispersion in das Polymer eingeführt (siehe auch Beschreibung weiter oben). In diesem Fall kann das in der Primärdispersion vorliegende Polyurethanharz seiten- und/oder endständige olefinisch ungesättigte Gruppen enthalten, über die dann die Pfropfpolymerisation mit den olefinisch ungesättigten Verbindungen verläuft. Das zu pfropfende Polyurethanharz kann also ein ungesättigtes Polyurethanharz sein. Bei der Pfropfpolymerisation handelt es sich dann um eine radikalische Polymerisation olefinisch ungesättigter Reaktionspartner. Möglich ist beispielsweise auch, dass die zur Pfropfpolymerisation eingesetzten olefinisch ungesättigten Verbindungen mindestens eine Hydroxygruppe enthalten. Dann kann auch zunächst eine Anbindung der olefinisch ungesättigten Verbindungen über diese Hydroxygruppen durch Reaktion mit freien Isocyanatgruppen des Polyurethanharzes erfolgen. Diese Anbindung findet anstelle oder neben der radikalischen Reaktion der olefinisch ungesättigten Verbindungen mit den gegebenenfalls vorhandenen seiten- und/oder endständigen olefinisch ungesättigten Gruppen des Polyurethanharzes statt. Danach folgt dann wieder die Pfropfpolymerisation über radikalische Polymerisation wie sie weiter oben beschrieben wurde. Erhalten werden jedenfalls mit olefinisch ungesättigten Verbindungen, vorzugsweise olefinisch ungesättigten Monomeren, gepfropfte Polyurethanharze.

Als olefinisch ungesättigte Verbindungen, mit denen das Polyurethanharz bevorzugt gepfropft wird, können praktisch alle radikalisch polymerisierbaren, olefinisch ungesättigten und organischen Monomere eingesetzt werden, die dem Fachmann für diese Zwecke zur Verfügung stehen. Beispielhaft seien einige bevorzugte Monomerklassen genannt:
- Hydroxyalkylester der (Meth)acrylsäure oder anderer alpha, beta -ethylenisch ungesättigter Carbonsäuren,
- (Meth)acrylsäurealkylester und/oder -cycloalkylester mit bis zu 20 Kohlenstoffatomen im Alkylrest,
- Ethylenisch ungesättigte Monomere, enthaltend mindestens eine Säuregruppe, insbesondere genau eine Carboxylgruppe, wie beispielsweise (Meth)acrylsäure,
- Vinylester von in alpha-Stellung verzweigten Monocarbonsäuren mit 5 bis 18 Kohlenstoffatomen,
- Umsetzungsprodukte aus (Meth)acrylsäure mit dem Glycidylester einer in alpha-Stellung verzweigten Monocarbonsäure mit 5 bis 18 Kohlenstoffatomen,
- Weitere ethylenisch ungesättigte Monomere wie Olefine (beispielsweise Ethylen), (Meth)acrylsäureamide, vinylaromatische Kohlenwasserstoffe (beispielsweise Styrol), Vinylverbindungen wie Vinylchlorid und/oder Vinylether wie Ethylvinylether.

Bevorzugt werden (Meth)acrylatgruppen-haltige Monomere eingesetzt, sodass das es sich bei den aufgepfropften Seitenketten um Poly(meth)acrylat-basierende Seitenketten handelt.

Die seiten- und/oder endständigen olefinisch ungesättigten Gruppen in dem Polyurethanharz, über die die Pfropfpolymerisation mit den olefinisch ungesättigten Verbindungen verlaufen kann, werden bevorzugt über bestimmte Monomere in das Polyurethanharz eingeführt. Diese bestimmten Monomere enthalten neben einer olefinisch ungesättigten Gruppe beispielsweise noch mindestens eine gegenüber Isocyanatgruppen reaktive Gruppe. Bevorzugt sind Hydroxygruppen sowie primäre und sekundäre Aminogruppen. Insbesondere bevorzugt sind Hydroxygruppen.

Natürlich können die beschriebenen Monomere, durch welche die seiten- und/oder endständigen olefinisch ungesättigten Gruppen in das Polyurethanharz eingeführt werden können, auch zum Einsatz kommen, ohne dass das Polyurethanharz danach noch zusätzlich mit olefinisch ungesättigten Verbindungen gepfropft wird. Bevorzugt ist allerdings, dass das Polyurethanharz mit olefinisch ungesättigten Verbindungen gepfropft ist.

Das bevorzugt enthaltene Polyurethanharz kann ein selbst- und/oder fremdvernetzendes Bindemittel sein. Bevorzugt umfasst das Polyurethanharz reaktive funktionelle Gruppen, durch die eine Fremdvernetzung möglich ist. In diesem Fall ist in dem pigmentierten wässrigen Basislack bevorzugt mindestens ein Vernetzungsmittel enthalten. Insbesondere handelt es sich bei den reaktiven funktionellen Gruppen, durch die eine Fremdvernetzung möglich ist, um Hydroxygruppen. Besonders vorteilhaft sind im Rahmen des erfindungsgemäßen Verfahrens polyhydroxyfunktionelle Polyurethanharze einsetzbar. Dies bedeutet, dass das Polyurethanharz im Mittel mehr als eine Hydroxygruppe pro Molekül enthält.

Die Herstellung des Polyurethanharzes erfolgt nach den üblichen Methoden der Polymerchemie. Gemeint sind dabei beispielsweise die Polymerisation von Polyisocyanaten und Polyolen zu Polyurethanen und die bevorzugt dann folgende Pfropfpolymerisation mit olefinisch ungesättigten Verbindungen. Diese Methoden sind dem Fachmann bekannt und können individuell angepasst werden. Beispielhafte Herstellungsverfahren und Reaktionsbedingungen sind der europäischen Patentschrift EP 0521 928 B1, Seite 2, Zeile 57 bis Seite 8, Zeile 16 zu entnehmen.

Das bevorzugt enthaltene Polyurethanharz besitzt beispielsweise eine Hydroxylzahl von 0 bis 250 mg KOH/g, insbesondere aber von 20 bis 150 mg KOH/g. Die Säurezahl des Polyurethanharzes liegt bevorzugt bei 5 bis 200 mg KOH/g, insbesondere bei 10 bis 40 mg KOH/g. Die Hydroxylzahl wird im Rahmen der vorliegenden Erfindung nach DIN 53240 bestimmt.

Der Polyurethanharzgehalt liegt bevorzugt zwischen 5 und 80 Gew.-%, besonders bevorzugt zwischen 8 und 70 Gew.-% und besonders bevorzugt zwischen 10 und 60 Gew.-%, jeweils bezogen auf den filmbildenden Festkörper des Basislacks.

Unabhängig davon, dass im Rahmen der vorliegenden Erfindung stellenweise sowohl Polyurethane (auch genannt Polyurethanharze), als auch Polyurethan-Poly(meth)acrylate genannt werden, gilt, dass der Ausdruck Polyurethane als Oberbegriff die Polyurethan-Poly(meth)acrylate umfasst. Wird an einer bestimmten Textstelle also nicht zwischen beiden Polymerklassen unterschieden, sondern ist lediglich der Ausdruck Polyurethan oder Polyurethanharz genannt, gelten beide Polymerklassen als umfasst.

Unter filmbildendem Festkörper, welcher letztlich dem Bindemittelanteil entspricht, ist der nichtflüchtige Gewichtsanteil des Basislacks ohne Pigmente und gegebenenfalls Füllstoffe zu verstehen. Der filmbildende Festkörper ist folgendermaßen bestimmbar: Eine Probe des pigmentierten wässrigen Basislacks (etwa 1 g) wird mit der 50 bis 100-fachen Menge Tetrahydrofuran versetzt und dann etwa 10 Minuten gerührt. Anschließend werden die unlöslichen Pigmente und gegebenenfalls Füllstoffe abfiltriert, der Rückstand mit wenig THF nachgespült und von dem so erhaltenen Filtrat das THF am Rotationsverdampfer entfernt. Der Rückstand des Filtrats wird zwei Stunden bei 120°C getrocknet und der dabei resultierende filmbildende Festkörper ausgewogen.

Die Summe über die gewichtsprozentualen Anteile, bezogen auf das Gesamtgewicht des pigmentierten wässrigen Basislacks, aller Polyurethanharze beträgt bevorzugt 2 bis 40 Gew.-%, besonders bevorzugt 2,5 bis 30 Gew.-% und ganz besonders bevorzugt 3 bis 25 Gew.-%.

Bevorzugt ist zudem ein Verdicker enthalten. Als Verdicker eignen sich anorganische Verdicker aus der Gruppe der Schichtsilikate. Neben den anorganischen Verdickern können jedoch auch ein oder mehrere organische Verdicker eingesetzt werden. Diese werden vorzugsweise gewählt aus der Gruppe bestehend aus (Meth)acrylsäure-(Meth)acrylat-Copolymerisat-Verdickern, wie beispielsweise dem Handelsprodukt Rheovis AS S130 (BASF) und Polyurethanverdickern, wie beispielsweise dem Handelsprodukt Rheovis PU 1250 (BASF). Die eingesetzten Verdicker sind von den eingesetzten Bindemitteln verschieden.

Darüber hinaus kann der pigmentierte wässrige Basislack noch mindestens einen Zusatzstoff enthalten. Beispiele für derartige Zusatzstoffe sind rückstandsfrei oder im Wesentlichen rückstandsfrei thermisch zersetzbare Salze, von den oben beschriebenen Polymeren verschiedene physikalisch, thermisch und/oder mit aktinischer Strahlung härtbare Harze als Bindemittel, weitere Vernetzungsmittel, organische Lösemittel, Reaktivverdünner, transparente Pigmente, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Initiatoren für radikalische Polymerisationen, Haftvermittler, Verlaufsmittel, filmbildende Hilfsmittel, Sag-Control-Agents (SCAs), Flammschutzmittel, Korrosionsinhibitoren, Wachse, Sikkative, Biozide und Mattierungsmittel. Enthalten sein können auch Verdicker wie anorganische Verdicker aus der Gruppe der Schichtsilikate oder organische Verdicker wie (Meth)acrylsäure-(Meth)acrylat-Copolymerisat-Verdicker oder auch Polyurethanverdicker, welche von den eingesetzten Bindemitteln verschieden sind.

Geeignete Zusatzstoffe der vorstehend genannten Art sind beispielsweise aus
- der deutschen Patentanmeldung DE 199 48 004 A1, Seite 14, Zeile 4, bis Seite 17, Zeile 5,
- dem deutschen Patent DE 100 43 405 C1, Spalte 5, Absätze [0031] bis [0033],
bekannt. Sie werden in den üblichen und bekannten Mengen eingesetzt.

Der Festkörpergehalt der erfindungsgemäßen Basislacke kann je nach den Erfordernissen des Einzelfalls variieren. In erster Linie richtet sich der Festkörpergehalt nach der für die Applikation, insbesondere Spritzapplikation, erforderlichen Viskosität, so dass er vom Fachmann aufgrund seines allgemeinen Fachwissens gegebenenfalls unter Zuhilfenahme weniger orientierender Versuche eingestellt werden kann.

Vorzugsweise liegt der Festkörpergehalt der Basislacke bei 5 bis 70 Gew.-%, besonders bevorzugt bei 8 bis 60 Gew.-% und ganz besonders bevorzugt bei 12 bis 55 Gew.-%.

Unter Festkörpergehalt (nicht-flüchtiger Anteil) ist derjenige Gewichtsanteil zu verstehen, der unter festgelegten Bedingungen beim Eindampfen als Rückstand verbleibt. In der vorliegenden Anmeldung wird der Festkörper, sofern nicht explizit anders angegeben, nach DIN EN ISO 3251 bestimmt. Dazu wird der Basislack für 60 Minuten bei 130°C eingedampft.

Diese Prüfmethode wird, sofern nicht anders angegeben, ebenfalls angewandt, um beispielsweise den Anteil verschiedener Komponenten des Basislacks am Gesamtgewicht des Basislacks zu bestimmen. So kann beispielsweise der Festkörper einer Dispersion eines Polyurethanharzes, welches dem Basislack zugegeben werden soll, entsprechend bestimmt werden, um den Anteil dieses Polyurethanharzes an der Gesamtkomposition zu ermitteln.

Der erfindungsgemäße Basislack ist wässrig. Der Ausdruck "wässrig" ist dem Fachmann in diesem Zusammenhang bekannt. Gemeint ist grundsätzlich ein Basislack, der nicht ausschließlich auf organischen Lösemitteln basiert, das heißt nicht ausschließlich als Lösemittel solche auf organischer Basis enthält, sondern der im Gegenteil als Lösemittel einen signifikanten Anteil Wasser enthält. Bevorzugt ist "wässrig" im Rahmen der vorliegenden Erfindung so zu verstehen, dass das jeweilige Beschichtungsmittel, insbesondere der Basislack, einen Anteil von mindestens 40 Gew.-%, bevorzugt mindestens 50 Gew.-%, ganz besonders bevorzugt mindestens 60 Gew.-% Wasser, jeweils bezogen auf die Gesamtmenge der enthaltenen Lösemittel (das heißt Wasser und organische Lösemittel), aufweist. Darunter bevorzugt beträgt der Anteil an Wasser 40 bis 90 Gew.-%, insbesondere 50 bis 80 Gew.-%, ganz besonders bevorzugt 60 bis 75 Gew.-%, jeweils bezogen auf die Gesamtmenge der enthaltenen Lösemittel.

Die Herstellung der erfindungsgemäß eingesetzten Basislacke kann unter Einsatz der für die Herstellung von Basislacken üblichen und bekannten Mischverfahren und Mischaggregaten erfolgen.

### Das erfindungsgemäße Verfahren und die erfindungsgemäße Mehrschichtlackierung

Ein weiterer Aspekt der vorliegenden Erfindung ist ein Verfahren zur Herstellung einer mehrschichtigen Lackierung, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird,
welches dadurch gekennzeichnet ist, dass in Stufe (1) ein pigmentierter wässriger Basislack eingesetzt wird, welcher mindestens ein erfindungsgemäßes Reaktionsprodukt enthält. Alle vorstehend genannten Ausführungen hinsichtlich des erfindungsgemäßen Reaktionsprodukts und des pigmentierten wässrigen Basislacks gelten auch für das erfindungsgemäße Verfahren. Dies gilt insbesondere auch für alle bevorzugten, besonders bevorzugten und ganz besonders bevorzugten Merkmale.

Das besagte Verfahren wird bevorzugt zur Herstellung von farbgebenden Mehrschichtlackierungen, effektgebenden Lackierungen und farb- und effektgebenden Lackierungen eingesetzt.

Die Applikation des erfindungsgemäß eingesetzten pigmentierten wässrigen Basislacks erfolgt üblicherweise auf mit Füller oder Grundierfüller vorbehandelte Metall- oder Kunststoffsubstrate. Gegebenenfalls kann der besagte Basislack auch direkt auf dem Kunststoffuntergrund aufgebracht werden.

Soll ein Metallsubstrat beschichtet werden, so wird dieses vor der Applikation des Füllers oder Grundierfüllers bevorzugt noch mit einer Elektrotauchlackierung beschichtet.

Wird ein Kunststoffsubstrat beschichtet, so wird dieses vor der Applikation des Füllers oder Grundierfüllers bevorzugt noch vorbehandelt. Die hierzu am häufigsten angewendeten Verfahren sind das Beflammen, die Plasmabehandlung und die Corona-Entladung. Bevorzugt wird das Beflammen eingesetzt.

Die Applikation des erfindungsgemäßen pigmentierten wässrigen Basislacks auf wie oben beschriebene mit gehärteten Elektrotauchlackierungen und/oder Füllern vorbeschichtete Metallsubstrate kann in den im Rahmen der Automobilindustrie üblichen Schichtdicken im Bereich von beispielsweise 5 bis 100 Mikrometer, bevorzugt 5 bis 60 Mikrometer erfolgen (Trockenfilmschichtdicke). Dabei werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heissspritzapplikation wie zum Beispiel Hot-Air-Heissspritzen.

Nach der Applikation des pigmentierten wässrigen Basislacks kann dieser nach bekannten Methoden getrocknet werden. Beispielsweise können (1-Komponenten)-Basislacke, welche bevorzugt sind, bei Raumtemperatur für 1 bis 60 Minuten abgelüftet werden und darauf folgend bevorzugt bei gegebenenfalls leicht erhöhten Temperaturen von 30 bis 90°C getrocknet werden. Unter Ablüften und Trocknung ist im Rahmen der vorliegenden Erfindung ein Abdunsten von organischen Lösemitteln und/oder Wasser zu verstehen, wodurch der Lack trockener, aber noch nicht gehärtet wird beziehungsweise noch kein vollständig vernetzter Lackfilm gebildet wird.

Dann wird ein handelsüblicher Klarlack nach ebenfalls gängigen Methoden appliziert, wobei die Schichtdicken wiederum in den gängigen Bereichen, beispielsweise 5 bis 100 Mikrometer (Trockenfilmschichtdicke), liegen.

Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet. Dabei finden beispielsweise Vernetzungsreaktionen statt, wodurch eine erfindungsgemäße farb- und/oder effektgebende mehrschichtige Lackierung auf einem Substrat hergestellt wird. Die Härtung erfolgt bevorzugt thermisch bei Temperaturen von 60 bis 200°C. Als thermisch härtende Basislacke sind solche bevorzugt, die als zusätzliches Bindemittel ein Polyurethanharz und als Vernetzungsmittel ein Aminoplastharz oder ein blockiertes oder unblockiertes Polyisocyanat, bevorzugt ein Aminoplastharz, enthalten. Unter den Aminoplastharzen sind Melaminharze bevorzugt.

In einer besonderen Ausführungsform umfasst das Verfahren zur Herstellung einer mehrschichtigen Lackierung die folgenden Schritte:
Herstellung einer gehärteten Elektrotauchlackschicht auf dem metallischen Substrat durch elektrophoretisches Aufbringen eines Elektrotauchlacks auf das Substrat und anschließende Härtung des Elektrotauchlacks,
Herstellung (i) einer Basislackschicht oder (ii) mehrerer direkt aufeinander folgender Basislackschichten direkt auf der gehärteten Elektrotauchlackschicht durch (i) Aufbringen eines wässrigen Basislacks direkt auf die Elektrotauchlackschicht oder (ii) direkt aufeinanderfolgendes Aufbringen von mehreren Basislacken auf die Elektrotauchlackschicht,
Herstellung einer Klarlackschicht direkt auf (i) der Basislackschicht oder (ii) der obersten Basislackschicht durch Aufbringen eines Klarlacks direkt auf (i) die eine Basislackschicht oder (ii) die oberste Basislackschicht,
wobei (i) der eine Basislack oder (ii) mindestens einer der Basislacke ein erfindungsgemäßer Basislack ist,
gemeinsame Härtung der Basislackschicht (i) oder der Basislackschichten (ii) sowie der Klarlackschicht.

In der letztgenannten Ausführungsform wird also im Vergleich zu den oben beschriebenen Standardverfahren auf die Applikation und separate Härtung eines gängigen Füllers verzichtet. Stattdessen werden alle auf die Elektrotauchlackschicht applizierten Schichten gemeinsam gehärtet, wodurch der Gesamtprozess deutlich ökonomischer gestaltet wird. Trotzdem gelingt auf diese Weise und insbesondere durch den Einsatz eines erfindungsgemäßen Basislacks enthaltend ein erfindungsgemäßes Reaktionsprodukt der Aufbau von Mehrschichtlackierungen, die hervorragende mechanische Stabilität und Haftung aufweisen und damit technologisch besonders herausragend sind.

Das Aufbringen eines Beschichtungsmittels direkt auf ein Substrat beziehungsweise direkt auf eine zuvor hergestellte Beschichtungsschicht versteht sich wie folgt. Das jeweilige Beschichtungsmittel wird so aufgebracht, dass die daraus hergestellte Beschichtungsschicht auf dem Substrat (der anderen Beschichtungsschicht) angeordnet ist und in direktem Kontakt mit dem Substrat (der anderen Beschichtungsschicht) steht. Zwischen Beschichtungsschicht und Substrat (anderer Beschichtungsschicht) ist also insbesondere keine andere Schicht angeordnet. Ohne die Angabe direkt ist die aufgebrachte Beschichtungsschicht zwar auf dem Substrat (der anderen Schicht) angeordnet, es muss aber nicht zwingend ein direkter Kontakt vorhanden sein. Insbesondere können weitere Schichten dazwischen angeordnet sein. Im Rahmen der vorliegenden Erfindung gilt also folgendes. Ist keine Spezifizierung von direkt angegeben, so ist augenscheinlich keine Beschränkung auf direkt gegeben.

Die Beschichtung von Kunststoffsubstraten erfolgt im Grunde genommen analog zu der von Metallsubstraten. Allerdings wird hier im Allgemeinen bei deutlich niedrigeren Temperaturen von 30 bis 90 °C gehärtet. Bevorzugt ist daher der Einsatz von Zweikomponentenklarlacken.

Mit Hilfe des erfindungsgemäßen Verfahrens können metallische und nichtmetallische Substrate, insbesondere Kunststoffsubstrate, vorzugsweise Automobilkarosserien oder Teile davon lackiert werden.

Das erfindungsgemäße Verfahren kann ferner zur Doppellackierung in der OEM-Lackierung eingesetzt werden. Darunter ist zu verstehen, dass ein Substrat, welches mit Hilfe des erfindungsgemäßen Verfahrens beschichtet wurde, ein zweites Mal, ebenfalls mit Hilfe des erfindungsgemäßen Verfahrens, lackiert wird.

Die Erfindung betrifft ferner Mehrschichtlackierungen, welche nach dem oben beschriebenen Verfahren herstellbar sind. Diese Mehrschichtlackierungen sollen im Folgenden als erfindungsgemäße Mehrschichtlackierungen bezeichnet werden.

Alle vorstehend genannten Ausführungen hinsichtlich des erfindungsgemäßen Reaktionsprodukts und des pigmentierten wässrigen Basislacks gelten entsprechend auch für die besagte Mehrschichtlackierung sowie für das erfindungsgemäße Verfahren. Dies gilt insbesondere auch für alle bevorzugten, besonders bevorzugten und ganz besonders bevorzugten Merkmale.

Bevorzugt handelt es sich bei den erfindungsgemäßen Mehrschichtlackierungen um farbgebende Mehrschichtlackierungen, effektgebenden Lackierungen und farb- und effektgebenden Lackierungen.

Ein weiterer Aspekt der Erfindung betrifft das erfindungsgemäße Verfahren, wobei es sich bei dem besagten Substrat aus Stufe (1) um eine Mehrschichtlackierung handelt, welche Fehlstellen besitzt. Bei dieser Substrat-Mehrschichtlackierung, welche Fehlstellen besitzt, handelt es sich also um eine Originallackierung, welche ausgebessert oder komplett überlackiert werden soll.

Das erfindungsgemäße Verfahren eignet sich demnach zur Ausbesserung von Fehlstellen auf Mehrschichtlackierungen (Reparatur). Als Fehlstellen beziehungsweise Filmfehler werden im Allgemeinen Störungen an und in der Beschichtung, die meist nach ihrer Form oder ihrem Aussehen benannt werden, bezeichnet. Dem Fachmann ist eine Vielzahl von möglichen Arten von solchen Filmfehlern bekannt. Diese werden beispielsweise in Römpp-Lexikon Lacke und Druckfarben, Georg Thieme Verlag, Stuttgart, New York, 1998, Seite 235, "Filmfehler" beschrieben.

Die mit Hilfe des erfindungsgemäßen Verfahrens hergestellten Mehrschichtlackierungen können ebenfalls solche Fehlstellen aufweisen. In einer bevorzugten Ausführungsform des erfindungsgemäßen Verfahrens handelt es sich bei dem Substrat aus Stufe (1) daher um eine erfindungsgemäße Mehrschichtlackierung, welche Fehlstellen aufweist.

Diese Mehrschichtlackierungen werden bevorzugt auf Automobilkarossen oder Teilen davon mit Hilfe des oben bezeichneten erfindungsgemäßen Verfahrens im Rahmen der Automobilserienlackierung hergestellt. Treten solche Fehlstellen direkt nach erfolgter OEM-Lackierung auf, so werden diese direkt ausgebessert. Man spricht daher auch von OEM-Automobilreparaturlackierung. Sind nur kleine Fehlstellen auszubessern, so wird nicht die ganze Karosse komplett überlackiert (Doppellackierung), sondern nur der sogenannte "Spot" repariert. Letzterer Prozess wird "Spot Repair" genannt. Besonders bevorzugt ist daher der Einsatz des erfindungsgemäßen Verfahrens zum Ausbessern von Fehlstellen auf erfindungsgemäßen Mehrschichtlackierungen (Originallackierungen) in der OEM-Automobilreparaturlackierung.

Sofern im Rahmen der vorliegenden Erfindung der Bereich der Automobilreparaturlackierung angesprochen ist, das heißt also von der Ausbesserung von Fehlstellen die Rede ist, und dabei als Substrat eine Mehrschichtlackierung, welche Fehlstellen besitzt, genannt wird, ist hiermit selbstverständlich gemeint, dass diese Substrat-Mehrschichtlackierung mit Fehlstellen (Originallackierung) in der Regel auf einem wie oben beschriebenen Metallsubstrat oder einem Kunststoffsubstrat angeordnet ist.

Damit die ausgebesserte Stelle sich farblich nicht vom Rest der Originallackierung unterscheidet, ist es bevorzugt, dass der in Stufe (1) des erfindungsgemäßen Verfahrens zur Ausbesserung von Fehlstellen eingesetzte wässrige Basislack derselbe ist, wie der, der zur Herstellung der Substrat-Mehrschichtlackierung mit Fehlstellen (Originallackierung) eingesetzt wurde.

Die vorstehend genannten Ausführungen bezüglich des erfindungsgemäßen Reaktionsprodukts und des wässrigen pigmentierten Basislacks gelten somit auch für den in Rede stehenden Einsatz des erfindungsgemäßen Verfahrens zum Ausbessern von Fehlstellen auf einer mehrschichtigen Lackierung. Dies gilt insbesondere auch für alle genannten bevorzugten, besonders bevorzugten und ganz besonders bevorzugten Merkmale. Es ist weiterhin bevorzugt, dass es sich bei den auszubessernden, erfindungsgemäßen Mehrschichtlackierungen um farbgebende Mehrschichtlackierungen, effektgebende Lackierungen und farb- und effektgebende Lackierungen handelt.

Die oben beschriebenen Fehlstellen auf der erfindungsgemäßen Mehrschichtlackierung lassen sich mit Hilfe des vorstehend beschriebenen erfindungsgemäßen Verfahrens ausbessern. Hierzu kann die auszubessernde Oberfläche der Mehrschichtlackierung zunächst angeschliffen werden. Bevorzugt wird das Anschleifen so ausgeführt, dass von der Originallackierung nur die Basislackierung und die Klarlackierung, gegebenenfalls nur die Klarlackierung, ab- oder angeschliffen werden, nicht aber die in der Regel darunter angeordnete Füllerschicht und Grundierungsschicht ab- oder angeschliffen wird. Auf diese Weise kann bei der Reparatur insbesondere auf die erneute Applikation von speziellen Grundierungen und Grundierfüllern verzichtet werden. Diese Form des Anschleifens hat sich insbesondere im Bereich der OEM-Automobilreparaturlackierung bewährt, da hier im Gegensatz zur Reparatur in einer Werkstatt in der Regel nur Fehlstellen im Schichtbereich Basislack und/oder Klarlack auftreten, jedoch insbesondere keine Fehlstellen im Bereich der darunter angeordneten Füller- und Grundierungsschichten auftreten. Fehlstellen in den letztgenannten Schichten sind eher im Bereich der Reparatur in Werkstätten anzutreffen. Beispielhaft seien Lackschäden wie Kratzer genannt, welche beispielsweise durch mechanische Einflüsse erzeugt werden und oft bis auf die Substratoberfläche (Metall- oder Kunststoffsubstrat) reichen.

Nach dem Anschleifen erfolgt die Applikation des pigmentierten wässrigen Basislacks auf die Fehlstelle in der Originallackierung durch Spritzapplikation, beispielsweise durch pneumatische Zerstäubung. Nach der Applikation des pigmentierten wässrigen Basislacks kann dieser nach bekannten Methoden getrocknet werden. Beispielsweise kann der Basislack bei Raumtemperatur für 1 bis 60 Minuten getrocknet werden und darauf folgend bei gegebenenfalls leicht erhöhten Temperaturen von 30 bis 80°C getrocknet werden. Unter Ablüften und Trocknung ist im Rahmen der vorliegenden Erfindung ein Abdunsten von organischen Lösemitteln und/oder Wasser zu verstehen, wodurch der Lack noch nicht vollständig gehärtet wird. Im Rahmen der vorliegenden Erfindung ist es bevorzugt, dass der Basislack als Bindemittel ein Polyurethanharz und als Vernetzungsmittel ein Aminoplastharz, bevorzugt ein Melaminharz, enthält.

Anschließend wird ein handelsüblicher Klarlack nach ebenfalls gängigen Methoden appliziert. Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet.

Beim so genannten Niedrigtemperatureinbrennen erfolgt die Härtung vorzugsweise bei Temperaturen von 20 bis 90°C. Hier werden bevorzugt Zweikomponentenklarlacke eingesetzt. Wird, wie oben beschrieben, als weiteres Bindemittel ein Polyurethanharz und als Vernetzungsmittel ein Aminoplastharz eingesetzt, so kommt es bei diesen Temperaturen in der Basislackschicht nur zu einer geringen Vernetzung durch das Aminoplastharz. Neben seiner Funktion als Härter dient das Aminoplastharz hierbei auch der Plastifizierung und kann die Pigmentbenetzung unterstützen. Neben den Aminoplastharzen können auch unblockierte Isocyanate eingesetzt werden. Diese vernetzen je nach Art des eingesetzten Isocyanats schon bei Temperaturen ab 20 °C. Solche Wasserbasislacke werden dann natürlich in der Regel als Zweikomponentensysteme formuliert.

Beim sogenannten Hochtemperatureinbrennen erfolgt die Härtung vorzugsweise bei Temperaturen von 130 bis 150°C. Hier werden sowohl Einkomponenten- als auch Zweikomponentenklarlacke eingesetzt. Wird, wie oben beschrieben, als weiteres Bindemittel ein Polyurethanharz und als Vernetzungsmittel ein Aminoplastharz eingesetzt, so kommt es bei diesen Temperaturen in der Basislackschicht zu einer Vernetzung durch das Aminoplastharz.

Ein weiterer Aspekt der vorliegenden Erfindung ist die Verwendung des erfindungsgemäßen Reaktionsprodukts in pigmentierten wässrigen Basislacken zur Verbesserung der Haftung und der Steinschlagbeständigkeit von Lackierungen, welche unter Einsatz des Basislacks hergestellt werden.

Im Folgenden wird die Erfindung anhand von Beispielen erläutert.

### Beispiele

### Bestimmung des zahlenmittleren Molekulargewichts:

Das zahlenmittlere Molekulargewicht wurde mittels Dampfdruckosmose bestimmt. Gemessen wurde mittels eines Dampfdruckosmometers (Modell 10.00, Fa. Knauer) an Konzentrationsreihen der zu untersuchenden Komponente in Toluol bei 50°C mit Benzophenon als Eichsubstanz zur Bestimmung der experimentellen Eichkonstante des eingesetzten Messgeräts (nach E. Schröder, G. Müller, K.-F. Arndt, "Leitfaden der Polymercharakterisierung", Akademie-Verlag, Berlin, S. 47 - 54, 1982, wobei darin allerdings Benzil als Eichsubstanz eingesetzt wurde).

### Herstellung erfindungsgemäßer Reaktionsprodukte (ER) sowie zum Vergleich eingesetzter Reaktionsprodukte (VR):

### ER1:

In einem 4 I Edelstahlreaktor, ausgestattet mit Ankerrührer, Thermometer, Kühler, Thermometer zur Kopftemperaturmessung und Wasserabscheider wurden 138,8 g Trimellitsäureanhydrid und 2890 g PolyTHF2000 (Fa. BASF SE) mit einer OH-Zahl von 56 mg KOH/g(1,45 mol) langsam auf 180°C aufgeheizt und bei dieser Temperatur gehalten (OH-Zahl Bestimmung nach DIN 53240). Der Reaktionsfortschritt wurde über die Bestimmung der Säurezahl verfolgt. Nach Erreichen einer Säurezahl von 15 mg KOH/g wurde gekühlt und mit 745g Butylglykol angelöst.

Der Feststoffgehalt des Harzes liegt bei 80,2% (gemessen bei 130°C für 1h im Umluftofen an einer Probe von 1 g unter Zugabe 1 ml Methylethylketon)
Zahlenmittleres Molekulargewicht: 4500 g/mol
Viskosität (70%ig in Butylglykol): 3300 mPas,
(gemessen bei 23°C mit einem Rotationsviskosimeter der Fa. Brookfield, Typ CAP 2000+, Spindel 3, Scherrate: 750 s⁻¹).

### ER2:

In einem 4 I Edelstahlreaktor, ausgestattet mit Ankerrührer, Thermometer, Kühler, Thermometer zur Kopftemperaturmessung und Wasserabscheider wurden 327 g Trimellitsäureanhydrid und 3400 g PolyTHF1000 (Fa. BASF SE) mit einer OH-Zahl von 112 mg KOH/g (3,4 mol) langsam auf 180°C aufgeheizt und bei dieser Temperatur gehalten (OH-Zahl Bestimmung nach DIN 53240). Der Reaktionsfortschritt wurde über die Bestimmung der Säurezahl verfolgt. Nach Erreichen einer Säurezahl von 26 mg KOH/g wurde die Schmelze gekühlt und mit 149 g Butylglykol auf einen Feststoffgehalt von etwa 80% angelöst.

Der Feststoffgehalt des Harzes liegt bei 81,1 % (gemessen bei 130°C für 1h im Umluftofen an einer Probe von 1 g unter Zugabe 1 ml Methylethylketon)
Zahlenmittleres Molekulargewicht (Dampfdruckosmose): 2300 g/mol
Viskosität (original): 2760 mPas,
(gemessen bei 23°C mit einem Rotationsviskosimeter der Fa. Brookfield, Typ CAP 2000+, Spindel 3, Scherrate: 1250 s⁻¹).

### ER3:

In einem 4 I Edelstahlreaktor, ausgestattet mit Ankerrührer, Thermometer, Kühler, Thermometer zur Kopftemperaturmessung und Wasserabscheider wurden 38,4 g Trimellitsäureanhydrid und 1160 g Terathane2900® (INVISTA, Wichita, Kansas, USA) mit einer OH-Zahl von 38,7 mg KOH/g (0,4 mol) langsam auf 180°C aufgeheizt und bei dieser Temperatur gehalten (OH-Zahl Bestimmung nach DIN 53240). Der Reaktionsfortschritt wurde über die Bestimmung der Säurezahl verfolgt. Nach Erreichen einer Säurezahl von 15 mg KOH/g wurde die Schmelze gekühlt und mit Butylglykol auf einen Feststoffgehalt von etwa 80% angelöst.

Der Feststoffgehalt des Harzes liegt bei 81,3 % (gemessen bei 130°C für 1h im Umluftofen an einer Probe von 1 g unter Zugabe 1 ml Methylethylketon) Zahlenmittleres Molekulargewicht (Dampfdruckosmose): 5400 g/mol
Viskosität (70% ig in Butylglykol): 4460 mPas,
(gemessen bei 23°C mit einem Rotationsviskosimeter der Fa. Brookfield, Typ CAP 2000+, Spindel 3, Scherrate: 750 s⁻¹).

### VR1:

In einem 4 I Edelstahlreaktor, ausgestattet mit Ankerrührer, Thermometer, Kühler, Thermometer zur Kopftemperaturmessung und Wasserabscheider wurden 288,2 g Trimellitsäureanhydrid und 1950 g PolyTHF650 (Fa. BASF SE) mit einer OH-Zahl von 172,6 mg KOH/g (3,0 mol) auf 80°C aufgeheizt (OH-Zahl Bestimmung nach DIN 53240). Nachdem eine klare Schmelze erhalten wurde, wurde langsam auf 160°C aufgeheizt und bei dieser Temperatur gehalten. Der Reaktionsfortschritt wurde über die Bestimmung der Säurezahl verfolgt. Nach Erreichen einer Säurezahl von 38 mg KOH/g erhielt man nach Abkühlen bei Raumtemperatur ein zähflüssiges Harz.

Der Feststoffgehalt des Harzes liegt bei 100 % (gemessen bei 130°C für 1h im Umluftofen an einer Probe von 1 g unter Zugabe 1 ml Methylethylketon)
Zahlenmittleres Molekulargewicht (Dampfdruckosmose): 1300 g/mol
Viskosität 80%ig in Butylglykol: 1723 mPas,
(gemessen bei 23°C mit einem Rotationsviskosimeter der Fa. Brookfield, Typ CAP 2000+, Spindel 3, Scherrate: 1250 s⁻¹).

### VR2:

In einem 4 I Edelstahlreaktor, ausgestattet mit Ankerrührer, Thermometer, Kühler, Thermometer zur Kopftemperaturmessung und Wasserabscheider wurden 288,2 g Trimellitsäureanhydrid und 1950 g PolyTHF650 (Fa. BASF SE) mit einer OH-Zahl von 172,6 mg KOH/g (3,0 mol) auf 80°C aufgeheizt (OH-Zahl Bestimmung nach DIN 53240). Nachdem eine klare Schmelze erhalten wurde, wurde langsam auf 160°C aufgeheizt und bei dieser Temperatur gehalten. Der Reaktionsfortschritt wurde über die Bestimmung der Säurezahl verfolgt. Nach Erreichen einer Säurezahl von 27 mg KOH/g wurde mit Butylglykol auf einen Feststoffgehalt von etwa 80% angelöst.

Der Feststoffgehalt des Harzes liegt bei 78 % (gemessen bei 130°C für 1h im Umluftofen an einer Probe von 1g unter Zugabe 1 ml Methylethylketon)
Zahlenmittleres Molekulargewicht (Dampfdruckosmose): 1500 g/mol
Viskosität: 6486 mPas,
(gemessen bei 23°C mit einem Rotationsviskosimeter der Fa. Brookfield, Typ CAP 2000+, Spindel 3, Scherrate: 750 s⁻¹).

### VR3:

In einem 4 I Edelstahlreaktor, ausgestattet mit Ankerrührer, Thermometer, Kühler, Thermometer zur Kopftemperaturmessung und Wasserabscheider wurden 384,2 g Trimellitsäureanhydrid und 1000 g PolyTHF250 (Fa. BASF SE) mit einer OH-Zahl von 449 mg KOH/g (4,0 mol) langsam auf 180°C aufgeheizt (OH-Zahl Bestimmung nach DIN 53240) und bei dieser Temperatur gehalten, bis eine Säurezahl von 32 mg KOH/g erreicht wurde. Danach wurde die Schmelze gekühlt und mit Butylglykol auf einen Feststoffgehalt von etwa 80 % angelöst.

Der Feststoffgehalt des Harzes liegt bei 76,4 % (gemessen bei 130°C für 1h im Umluftofen an einer Probe von 1g unter Zugabe 1 ml Methylethylketon)
Zahlenmittleres Molekulargewicht (Dampfdruckosmose): 400 g/mol
Viskosität: 11200 mPas,
(gemessen bei 23°C mit einem Rotationsviskosimeter der Fa. Brookfield, Typ CAP 2000+, Spindel 3, Scherrate: 750 s⁻¹)

### VR4:

In einem 4 I Edelstahlreaktor, ausgestattet mit Ankerrührer, Thermometer, Kühler, Thermometer zur Kopftemperaturmessung und Wasserabscheider wurden 384,2 g Trimellitsäureanhydrid und 1000 g PolyTHF250 (Fa. BASF SE) mit einer OH-Zahl von 449 mg KOH/g (4,0 mol) langsam auf 180°C aufgeheizt (OH-Zahl Bestimmung nach DIN 53240) und bei dieser Temperatur gehalten, bis eine Säurezahl von 80 mg KOH/g erreicht wurde. Danach wurde die Schmelze gekühlt und mit Butylglykol auf einen Feststoffgehalt von etwa 80 % angelöst.

Der Feststoffgehalt des Harzes liegt bei 83,30% (gemessen bei 130°C für 1h im Umluftofen an einer Probe von 1g unter Zugabe 1 ml Methylethylketon)
Zahlenmittleres Molekulargewicht (Dampfdruckosmose): 300 g/mol
Viskosität (original): 2840 mPas,
(gemessen bei 23°C mit einem Rotationsviskosimeter der Fa. Brookfield, Typ CAP 2000+, Spindel 3, Scherrate: 750 s⁻¹)

### Herstellung von wässrigen Basislacken

Hinsichtlich der in den nachstehenden Tabellen angegebenen Formulierungsbestandteile und deren Mengen ist folgendes zu berücksichtigen. Wird auf ein Handelsprodukt oder eine anderswo beschriebene Herstellvorschrift verwiesen, ist unabhängig von der jeweils gewählten Hauptbenennung des Bestandteils genau dieses Handelsprodukt oder genau das im Rahmen der referenzierten Vorschrift hergestellte Produkt gemeint.

Besitzt also ein Formulierungsbestandteil die Hauptbenennung "Melaminformaldehydharz" und ist dazu ein Handelsprodukt angegeben, so wird das Melaminformaldehydharz als genau dieses Handelsprodukt eingesetzt. Gegebenenfalls im Handelsprodukt vorhandene weitere Bestandteile wie Lösemittel sind also zu berücksichtigen, wenn auf die Menge der Wirksubstanz (des Melaminformaldehydharzes) zurückgeschlossen werden soll.

Wird also für einen Formulierungsbestandteil auf eine Herstellvorschrift verwiesen und resultiert bei dieser Herstellung beispielsweise eine Polymer-Dispersion mit einem bestimmten Festkörper, so wird genau diese Dispersion eingesetzt. Es ist nicht maßgeblich, ob als Hauptbenennung der Begriff "Polymer-Dispersion" oder lediglich die Wirksubstanz, beispielsweise "Polymer", "Polyester" oder "polyurethanmodifiziertes Polyacrylat" gewählt wurde. Dies ist zu berücksichtigen, wenn auf die Menge der Wirksubstanz (des Polymers) zurückgeschlossen werden soll.

Alle in den Tabellen angegebenen Anteile sind Gewichtsteile.

### Herstellung eines nicht erfindungsgemäßen Wasserbasislacks 1

Die in der Tabelle A unter "wässrige Phase" aufgeführten Komponenten wurden in der angegebenen Reihenfolge zu einer wässrigen Mischung zusammengerührt. Im nächsten Schritt wurde aus den unter "organische Phase" aufgeführten Komponenten eine organische Mischung hergestellt. Die organische Mischung wurde zur wässrigen Mischung hinzugegeben. Sodann wurde 10 Minuten lang gerührt und mit Hilfe von deionisiertem Wasser und Dimethylethanolamin auf einen pH Wert von 8 und eine Spritzviskosität von 58 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle A: Wasserbasislack 1**

| Komponente | Gewichtsteile |
|---|---|
| **Wässrige Phase** | |
| Wässrige Lösung von 3% Natrium-Lithium-Magnesium-Schichtsilikat Laponite® RD (Fa. Altana-Byk) und 3% Pluriol® P900 (Fa. BASF SE) | 27 |
| Deionisiertes Wasser | 15,9 |
| Butylglykol (Fa. BASF SE) | 3,5 |
| Hydroxyfunktionelles polyurethanmodifiziertes Polyacrylat; hergestellt gemäß S. 7, Z. 55 bis S.8, Z. 23 der DE 4437535 A1 | 2,4 |
| 50 Gew.-%ige Lösung Rheovis® PU 1250 (BASF SE) in Butylglykol, Rheologiemittel | 0,2 |
| Hydroxyfunktioneller Polyester; hergestellt gemäß Beispiel D, Spalte 16, Z. 37-59 der DE-A-4009858 | 2,5 |
| TMDD 50% BG (Fa. BASF SE), 52%ige Lösung von 2,4,7,9-Tetramethyl-5-decin-4,7-diol in Butylglykol | 1,2 |
| Luwipal® 052 (Fa. BASF SE), Melamin-Formaldehyd-Harz | 4,7 |
| 10%ige Lösung von N,N-Dimethylethanolamin (Fa. BASF SE) in Wasser | 0,5 |
| Pfropfmischpolymerisat auf Polyurethanbasis; hergestellt analog DE 19948004 - A1 (Seite 27 - Beispiel 2) | 19,6 |
| Isopropanol (Fa. BASF SE) | 1,4 |
| Byk-347® (Fa. Altana-Byk) | 0,5 |
| Pluriol® P 900 (Fa. BASF SE) | 0,3 |
| Tinuvin® 384-2 (Fa. BASF SE) | 0,6 |
| Tinuvin® 123 (Fa. BASF SE) | 0,3 |
| Rußpaste | 4,3 |
| Blaupaste | 11,4 |
| Mica-Schlämme | 2,8 |

| **Organische Phase** | |
|---|---|
| Aluminiumpigment (Fa. Altana-Eckart) | 0,3 |
| Butylglykol (Fa. BASF SE) | 0,3 |
| Pfropfmischpolymerisat auf Polyurethanbasis; hergestellt analog DE 19948004 - A1 (Seite 27 - Beispiel 2) | 0,3 |

### Herstellung der Blaupaste:

Die Blaupaste wurde aus 69,8 Gewichtsteilen einer gemäß der internationalen Patentanmeldung WO 91/15528 Bindemitteldispersion A hergestellten acrylierten Polyurethandispersion, 12,5 Gewichtsteilen Paliogen® Blau L 6482, 1,5 Gewichtsteilen Dimethylethanolamin (10%ig in VE-Wasser), 1,2 Gewichtsteilen eines handelsüblichen Polyethers (Pluriol® P900 der Firma BASF SE) und 15 Gewichtsteilen deionisiertem Wasser hergestellt.

### Herstellung der Rußpaste:

Die Rußpaste wurde aus 25 Gewichtsteilen einer gemäß der internationalen Patentanmeldung WO 91/15528 Bindemitteldispersion A hergestellten acrylierten Polyurethandispersion, 10 Gewichtsteilen Ruß, 0,1 Gewichtsteilen Methylisobutylketon, 1,36 Gewichtsteilen Dimethylethanolamin (10%ig in VE-Wasser), 2 Gewichtsteilen eines handelsüblichen Polyethers (Pluriol® P900 der Firma BASF SE) und 61,45 Gewichtsteilen deionisiertem Wasser hergestellt.

### Herstellung der Mica-Schlämme:

Die Mica-Schlämme wurde durch Vermischen mittels eines Rührorgans von 1,5 Gewichtsteilen Pfropfmischpolymerisat auf Polyurethanbasis; hergestellt analog DE 19948004 - A1 (Seite 27 - Beispiel 2) und 1,3 Gewichtsteilen der handelsüblichen Mica Mearlin Ext. Fine Violet 539V der Firma Merck erhalten.

### Herstellung eines nicht erfindungsgemäßen Wasserbasislacks 2

Der Wasserbasislack 2 wurde analog Tabelle A hergestellt, wobei allerdings statt dem Polyester; hergestellt gemäß Beispiel D, Spalte 16, Z. 37-59 der DE-A-4009858 das Reaktionsprodukt VR1 eingesetzt wurde. Dabei wurde durch Ausgleich der Lösemittelmenge beziehungsweise durch Berücksichtigung der Festkörper der zuzugebenden Komponente derselbe Anteil des Reaktionsprodukts VR1 eingesetzt.

### Herstellung der nicht erfindungsgemäßen Wasserbasislacke 3 bis 5 und der erfindungsgemäßen Wasserbasislacke E1 bis E3

Analog der Herstellung des Wasserbasislacks 2 wurden weitere Basislacke durch Austausch des Polyesters, hergestellt gemäß Beispiel D, Spalte 16, Z. 37-59 der DE-A-4009858, hergestellt. Dabei wurde durch Ausgleich der Lösemittelmenge beziehungsweise durch Berücksichtigung der Festkörper der zuzugebenden Komponente derselbe Anteil des Reaktionsprodukts VR1 eingesetzt. Tabelle B zeigt alle Basislacke als Übersicht.

**Tabelle B: Basislacke**

| | Reaktionsprodukt |
|---|---|
| Wasserbasislack 1 | Polyester gemäß DE-A-4009858 |
| Wasserbasislack 2 | VR1 |
| Wasserbasislack 3 | VR2 |
| Wasserbasislack 4 | VR3 |
| Wasserbasislack 5 | VR4 |
| Wasserbasislack E1 | ER1 |
| Wasserbasislack E2 | ER2 |
| Wasserbasislack E3 | ER3 |

### Vergleich zwischen den Wasserbasislacken 1-5 und E1-E3

### Steinschlagbeständigkeit:

Zur Bestimmung der Steinschlagbeständigkeit wurden die Mehrschichtlackierungen nach der folgenden allgemeinen Vorschrift hergestellt:
Ein mit einer KTL (kathodische Elektrotauchlackierung) beschichtetes Stahlblech der Abmessungen 10 x 20 cm diente als Substrat.
Auf dieses Blech wurde zunächst der jeweilige Basislack (Tabelle B) in einer Zielschichtdicke (Trockenfilmschichtdicke) von 20 Mikrometern pneumatisch appliziert. Nach 1 min Ablüften des Basislacks bei Raumtemperatur wurde der Basislack über 10 min bei 70 °C im Umluftofen zwischengetrocknet. Auf die zwischengetrocknete Wasserbasislackschicht wurde ein üblicher Zweikomponentenklarlack (Progloss® 372 der Firma BASF Coatings GmbH) in einer Zielschichtdicke (Trockenfilmschichtdicke) von 40 Mikrometern appliziert. Die resultierende Klarlackschicht wurde während 20 Minuten bei Raumtemperatur abgelüftet. Anschließend wurden die Wasserbasislackschicht und die Klarlackschicht in einem Umluftofen während 30 Minuten bei 160°C gehärtet.

Die so erhaltenen Mehrschichtlackierungen wurden hinsichtlich ihrer Steinschlagbeständigkeit untersucht. Dazu wurde der Steinschlagtest wurde DIN 55966-1 durchgeführt. Die Beurteilung der Ergebnisse des Steinschlagtests wurde nach DIN EN ISO 20567-1 durchgeführt. Niedrigere Werte stehen für eine bessere Steinschlagbeständigkeit.

Die Ergebnisse finden sich in der Tabelle 1. Die Angabe des Wasserbasislacks (WBL) gibt jeweils an, welcher WBL in der jeweiligen Mehrschichtlackierung eingesetzt wurde.

**Tabelle 1: Steinschlagbeständigkeit der Wasserbasislacke 1-5 und E1-E3**

| **WBL** | **Steinschlagergebnis** |
|---|---|
| 1 | 2,5 |
| 2 | 2,5 |
| 3 | 2,0 |
| 4 | 3,5 |
| 5 | 4,0 |
| E1 | 1,0 |
| E2 | 1,5 |
| E3 | 1,0 |

Die Ergebnisse untermauern, dass der Einsatz der erfindungsgemäßen Reaktionsprodukte in Basislacken die Steinschlagbeständigkeit im Vergleich zu den Wasserbasislacken 1-5 deutlich erhöht. Die besten Ergebnisse zeigen die Reaktionsprodukte ER1 und ER3.

### Haftung:

Zur Bestimmung der Haftungseigenschaften wurde die Stabilität gegen das Auftreten von Blasen und Quellungen nach Schwitzwasserlagerung untersucht.

Dabei wurden Mehrschichtlackierungen nach der folgenden allgemeinen Vorschrift hergestellt:
Als Substrat diente ein mit einer Standard-KTL (Cathoguard® 800 der Firma BASF Coatings GmbH) beschichtetes Stahlblech der Abmessungen 10 x 20 cm.

Der jeweilige Wasserbasislack gemäß Tabelle B wurde nun in einer Zielschichtdicke (Trockenfilmschichtdicke) von 20 Mikrometern pneumatisch appliziert. Die resultierende Wasserbasislackschicht wurde 2 Minuten bei Raumtemperatur abgelüftet und anschließend während 10 Minuten im Umluftofen bei 70°C zwischengetrocknet. Auf die zwischengetrocknete Wasserbasislackschicht wurde ein üblicher Zweikomponentenklarlack in einer Zielschichtdicke (Trockenfilmschichtdicke) von 40 Mikrometern appliziert (Progloss® 372 der Firma BASF Coatings GmbH). Die resultierende Klarlackschicht wurde während 20 Minuten bei Raumtemperatur abgelüftet. Anschließend wurden die Wasserbasislackschicht und die Klarlackschicht in einem Umluftofen während 20 Minuten bei 140°C gehärtet. Der vorliegende Aufbau wird im Weiteren als Originallackierung bezeichnet.

Diese Originallackierung wird zur Erzeugung beziehungsweise Simulation von Fehlstellen mit Schleifpapier angeschliffen und dann wie in der Folge beschrieben einer erneuten Komplettlackierung mit Basislack und Klarlack unterworfen. Auf diese Weise wird eine Doppellackierung im Rahmen der OEM-Automobilreparaturlackierung simuliert.

Zunächst wird der jeweilige Wasserbasislack gemäß Tabelle B in einer Zielschichtdicke (Trockenfilmschichtdicke) von 20 Mikrometern auf die angeschliffene Originallackierung pneumatisch appliziert. Die resultierende Wasserbasislackschicht wurde 2 Minuten bei Raumtemperatur abgelüftet und anschließend während 10 Minuten im Umluftofen bei 70°C zwischengetrocknet. Auf die zwischengetrocknete Wasserbasislackschicht wurde ein so genannter 80°C-Zweikomponentenklarlack (2K-Reparaturklarlack, kratzfest der Firma BASF Coatings GmbH) in einer Zielschichtdicke (Trockenfilmschichtdicke) von 40 Mikrometern aufgebracht. Die resultierende Klarlackschicht wurde während 20 Minuten bei Raumtemperatur abgelüftet. Anschließend wurden die Wasserbasislackschicht und die Klarlackschicht in einem Umluftofen während 30 Minuten bei 80°C gehärtet.

Die so behandelten Stahlbleche beziehungsweise Reparaturaufbauten wurden nun über einen Zeitraum von 10 Tagen in einer Klimakammer nach Prüfklima CH nach DIN EN ISO 6270-2:2005-09 gelagert. Anschließend wurden die Bleche 24 Stunden nach Entnahme aus der Klimakammer visuell bezüglich Blasenbildung und Quellung untersucht.

Das Auftreten von Blasen wurde folgendermaßen durch eine Kombination von 2 Werten beurteilt:
- Die Anzahl der Blasen wurde durch eine Mengenangabe von 1 bis 5 bewertet, wobei mit m1 sehr wenige und m5 sehr viele Blasen bezeichnet wurden.
- Die Größe der Blasen wurde durch eine Größenangabe ebenfalls von 1 bis 5 bewertet, wobei mit g1 sehr kleine und g5 sehr große Blasen bezeichnet wurden.
- Die Bezeichnung m0g0 bedeutet demzufolge eine blasenfreie Lackierung nach Schwitzwasserlagerung und stellt bezüglich Blasenbildung ein hervorragendes Ergebnis dar.

Die Ergebnisse finden sich in der Tabelle 2.

**Tabelle 2: Blasenbildung und Quellung von Wasserbasislack 1-5 und den Wasserbasislacken E1-E3**

| **WBL** | **Blasenbildung** | **Quellung** |
|---|---|---|
| 1 | m5g4 | keine |
| 2 | m5g3 | stark |
| 3 | m3g2 | schwach |
| 4 | m5g3 | stark |
| 5 | m5g5 | sehr stark |
| E1 | m0g0 | keine |
| E2 | m0g0 | sehr schwach |
| E3 | m0g0 | keine |

Die Ergebnisse untermauern, dass der Einsatz der erfindungsgemäßen Reaktionsprodukte in Basislacken die Haftung im Reparaturaufbau im Vergleich zu den Wasserbasislacken 1-5 deutlich erhöht. Die besten Ergebnisse zeigen wiederum die Reaktionsprodukte ER1 und ER3.

## Patentansprüche

1. Pigmentierter wässriger Basislack enthaltend ein Polyether-basiertes Reaktionsprodukt, welches herstellbar ist durch Umsetzung von
(a) mindestens einem cyclischen Carbonsäureanhydrid enthaltend eine freie Carbonsäuregruppe und/oder das Halogenid einer Carbonsäuregruppe mit
(b) mindestens einem Polyether der allgemeinen Strukturformel (I) 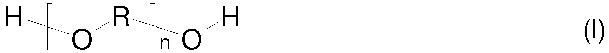 worin
R ein C₃- bis C₆-Alkylenrest ist und n entsprechend so gewählt ist, dass der Polyether (b) ein zahlenmittleres Molekulargewicht von 800 bis 4000 g/mol besitzt,
wobei die Komponenten (a) und (b) bei der Umsetzung in einem molaren Verhältnis von 0,7/2,3 bis 1,6/1,7 eingesetzt werden und das resultierende Reaktionsprodukt eine Säurezahl von 5 bis 50 mg KOH/g besitzt.

2. Basislack nach Anspruch 1, **dadurch gekennzeichnet, dass** der Polyether (b) ein zahlenmittleres Molekulargewicht von 1200 bis 3400 g/mol besitzt.

3. Basislack nach Anspruch 1 oder 2, **dadurch gekennzeichnet, dass** es sich bei der Gruppe R gemäß der allgemeinen Strukturformel (I) um Tetramethylenreste handelt.

4. Basislack nach einem der Ansprüche 1 bis 3, **dadurch gekennzeichnet, dass** die Komponenten (a) und (b) in einem molaren Verhältnis von 0,45/1 bis 0,55/1 eingesetzt werden.

5. Basislack nach einem der Ansprüche 1 bis 4, **dadurch gekennzeichnet, dass** das Polyether-basierte Reaktionsprodukt ein zahlenmittleres Molekulargewicht von 1500 bis 15000 g/mol besitzt.

6. Basislack nach einem der Ansprüche 1 bis 5, **dadurch gekennzeichnet, dass** als Komponente (a) mindestens ein cyclisches, aromatisches Carbonsäureanhydrid, das eine freie Carbonsäuregruppe enthält, bevorzugt Trimellitsäureanhydrid, eingesetzt wird.

7. Pigmentierter wässriger Basislack gemäß einem der Ansprüche 1 bis 6, **dadurch gekennzeichnet, dass** die Summe über die gewichtsprozentualen Anteile, bezogen auf das Gesamtgewicht des pigmentierten wässrigen Basislacks, aller Polyetherbasierten Reaktionsprodukte 0,1 bis 20 Gew.-% beträgt.

8. Pigmentierter wässriger Basislack nach einem der Ansprüche 1 bis 7, **dadurch gekennzeichnet, dass** er ein mittels olefinisch ungesättigten Monomeren gepfropftes Polyurethanharz, welches zudem Hydroxylgruppen enthält, sowie ein Melaminharz umfasst.

9. Polyether-basiertes Reaktionsprodukt, welches herstellbar ist durch Umsetzung von
(a) mindestens einem Carbonsäureanhydrid enthaltend eine freie Carbonsäuregruppe
mit
(b) mindestens einem Polyether der allgemeinen Strukturformel (I) 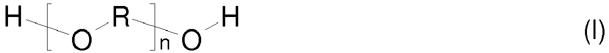 worin
R ein C₃- bis C₆-Alkylenrest ist und n entsprechend so gewählt ist, dass der Polyether (b) ein zahlenmittleres Molekulargewicht von 800 bis 4000 g/mol besitzt,
wobei die Komponenten (a) und (b) bei der Umsetzung in einem molaren Verhältnis von 0,7/2,3 bis 1,6/1,7 eingesetzt werden und das resultierende Reaktionsprodukt eine Säurezahl von 5 bis 50 mg KOH/g besitzt.

10. Verwendung eines Reaktionsprodukts gemäß Anspruch 9 in einem pigmentierten wässrigen Basislack zur Verbesserung der Haftung und der Steinschlagbeständigkeit von Lackierungen, welche unter Einsatz des Basislacks hergestellt werden.

11. Verfahren zur Herstellung einer mehrschichtigen Lackierung, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird,
**dadurch gekennzeichnet, dass** in Stufe (1) ein pigmentierter wässriger Basislack gemäß einem der Ansprüche 1 bis 8 eingesetzt wird.

12. Verfahren nach Anspruch 11, **dadurch gekennzeichnet, dass** das Substrat aus Stufe (1) ein mit einer gehärteten Elektrotauchlackschicht beschichtetes metallisches Substrat ist und alle auf die Elektrotauchlackschicht applizierten Schichten gemeinsam gehärtet werden.

13. Verfahren nach Anspruch 11, **dadurch gekennzeichnet, dass** es sich bei dem Substrat aus Stufe (1) um eine Mehrschichtlackierung handelt, welche Fehlstellen besitzt.

14. Verfahren nach Anspruch 13, **dadurch gekennzeichnet, dass** die Mehrschichtlackierung, welche Fehlstellen besitzt, eine solche ist, die gemäß dem Verfahren nach Anspruch 11 hergestellt wurde und im Anschluss daran durch mechanische äußere Einflüsse Fehlstellen erhalten hat.

15. Mehrschichtlackierung, herstellbar nach dem Verfahren gemäß einem der Ansprüche 11 bis 14.

## Claims

1. Pigmented aqueous basecoat material comprising a polyether-based reaction product which is preparable by reaction of
(a) at least one cyclic carboxylic anhydride comprising a free carboxylic acid group and/or the halide of a carboxylic acid group
with
(b) at least one polyether of the general structural formula (I) 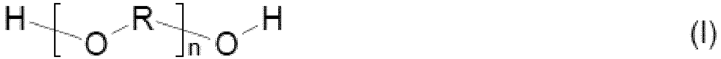 in which
R is a C₃ to C₆ alkylene radical and n is selected accordingly such that the polyether (b) possesses a number-average molecular weight of 800 to 4000 g/mol,
the components (a) and (b) being used in the reaction in a molar ratio of 0.7/2.3 to 1.6/1.7 and the resulting reaction product possessing an acid number of 5 to 50 mg KOH/g.

2. Basecoat material according to Claim 1, **characterized in that** the polyether (b) possesses a number-average molecular weight of 1200 to 3400 g/mol.

3. Basecoat material according to Claim 1 or 2, **characterized in that** the group R in the general structural formula (I) comprises tetramethylene radicals.

4. Basecoat material according to any of Claims 1 to 3, **characterized in that** the components (a) and (b) are used in a molar ratio of 0.45/1 to 0.55/1.

5. Basecoat material according to any of Claims 1 to 4, **characterized in that** the polyether-based reaction product possesses a number-average molecular weight of 1500 to 15 000 g/mol.

6. Basecoat material according to any of Claims 1 to 5, **characterized in that** component (a) used is at least one cyclic, aromatic carboxylic anhydride which comprises a free carboxylic acid group, preferably trimellitic anhydride.

7. Pigmented aqueous basecoat material according to any of Claims 1 to 6, **characterized in that** the sum total of the weight-percentage fractions, based on the total weight of the pigmented aqueous basecoat material, of all polyether-based reaction products is 0.1 to 20 wt%.

8. Pigmented aqueous basecoat material according to any of Claims 1 to 7, **characterized in that** it comprises a melamine resin and also a polyurethane resin that is grafted by means of olefinically unsaturated monomers and that further comprises hydroxyl groups.

9. Polyether-based reaction product which is preparable by reaction of
(a) at least one carboxylic anhydride comprising a free carboxylic acid group
with
(b) at least one polyether of the general structural formula (I) 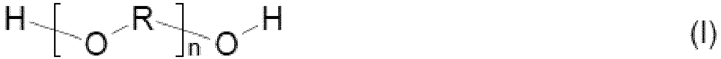 in which
R is a C₃ to C₆ alkylene radical and n is selected accordingly such that the polyether (b) possesses a number-average molecular weight of 800 to 4000 g/mol,
the components (a) and (b) being used in the reaction in a molar ratio of 0.7/2.3 to 1.6/1.7 and the resulting reaction product possessing an acid number of 5 to 50 mg KOH/g.

10. Use of a reaction product according to Claim 9 in a pigmented aqueous basecoat material for improving the adhesion and the stonechip resistance of paint systems produced using the basecoat material.

11. Method for producing a multicoat paint system by
(1) applying a pigmented aqueous basecoat material to a substrate,
(2) forming a polymer film from the coating material applied in stage (1),
(3) applying a clearcoat material to the resultant basecoat, and subsequently
(4) curing the basecoat together with the clearcoat,
**characterized in that** a pigmented aqueous basecoat material according to any of Claims 1 to 8 is used in step (1).

12. Method according to Claim 11, **characterized in that** the substrate from stage (1) is a metallic substrate coated with a cured electrocoat, and all coats applied to the electrocoat are cured jointly.

13. Method according to Claim 11, **characterized in that** the substrate from stage (1) is a multicoat paint system which possesses defects.

14. Method according to Claim 13, **characterized in that** the multicoat paint system which possesses defects is a system produced by the method according to Claim 11 which subsequently thereto has received defects as a result of external mechanical influences.

15. Multicoat paint system producible by the method according to any of Claims 11 to 14.

## Revendications

1. Vernis de base aqueux pigmenté contenant un produit de réaction à base de polyéther, qui peut être fabriqué par mise en réaction de :
(a) au moins un anhydride d'acide carboxylique cyclique contenant un groupe acide carboxylique libre et/ou l'halogénure d'un groupe acide carboxylique avec
(b) au moins un polyéther de la formule structurale générale (1) 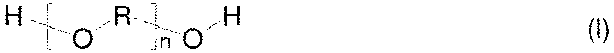 dans laquelle
R est un radical alkylène en C₃ à C₆ et n est choisi de telle sorte que le polyéther (b) présente un poids moléculaire moyen en nombre de 800 à 4 000 g/mol,
les composants (a) et (b) étant utilisés lors de la réaction en un rapport molaire de 0,7/2,3 à 1,6/1,7, et le produit de réaction résultant présentant un indice d'acidité de 5 à 50 mg KOH/g.

2. Vernis de base selon la revendication 1, **caractérisé en ce que** le polyéther (b) présente un poids moléculaire moyen en nombre de 1 200 à 3 400 g/mol.

3. Vernis de base selon la revendication 1 ou 2, **caractérisé en ce que** le groupe R selon la formule structurale générale (I) consiste en des radicaux tétraméthylène.

4. Vernis de base selon l'une quelconque des revendications 1 à 3, **caractérisé en ce que** les composants (a) et (b) sont utilisés en un rapport molaire de 0,45/1 à 0,55/1.

5. Vernis de base selon l'une quelconque des revendications 1 à 4, **caractérisé en ce que** le produit de réaction à base de polyéther présente un poids moléculaire moyen en nombre de 1 500 à 15 000 g/mol.

6. Vernis de base selon l'une quelconque des revendications 1 à 5, **caractérisé en ce qu'**au moins un anhydride d'acide carboxylique aromatique cyclique qui contient un groupe acide carboxylique libre, de préférence l'anhydride de l'acide trimellitique, est utilisé en tant que composant (a).

7. Vernis de base aqueux pigmenté selon l'une quelconque des revendications 1 à 6, **caractérisé en ce que** la somme des proportions en pourcentage en poids, par rapport au poids total du vernis de base aqueux pigmenté, de tous les produits de réaction à base de polyéther est de 0,1 à 20 % en poids.

8. Vernis de base aqueux pigmenté selon l'une quelconque des revendications 1 à 7, **caractérisé en ce qu'**il comprend une résine de polyuréthane greffée au moyen de monomères oléfiniquement insaturés, qui contient en outre des groupes hydroxyle, ainsi qu'une résine de mélamine.

9. Produit de réaction à base de polyéther, qui peut être fabriqué par mise en réaction de :
(a) au moins un anhydride d'acide carboxylique contenant un groupe acide carboxylique libre
avec
(b) au moins un polyéther de la formule structurale générale (I) 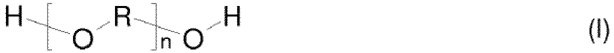 dans laquelle
R est un radical alkylène en C₃ à C₆ et n est choisi de telle sorte que le polyéther (b) présente un poids moléculaire moyen en nombre de 800 à 4 000 g/mol,
les composants (a) et (b) étant utilisés lors de la réaction en un rapport molaire de 0,7/2,3 à 1,6/1,7, et le produit de réaction résultant présentant un indice d'acidité de 5 à 50 mg KOH/g.

10. Utilisation d'un produit de réaction selon la revendication 9 dans un vernis de base aqueux pigmenté pour améliorer l'adhérence et la résistance à la chute de pierres de vernissages qui sont fabriqués en utilisant le vernis de base.

11. Procédé de fabrication d'un vernissage multicouche, selon lequel
(1) un vernis de base aqueux pigmenté est appliqué sur un substrat,
(2) un film polymère est formé à partir du vernis appliqué à l'étape (1),
(3) un vernis transparent est appliqué sur la couche de vernis de base ainsi obtenue, puis
(4) la couche de vernis de base est durcie conjointement avec la couche de vernis transparent,
**caractérisé en ce qu'**à l'étape (1), un vernis de base aqueux pigmenté selon l'une quelconque des revendications 1 à 8 est utilisé.

12. Procédé selon la revendication 11, **caractérisé en ce que** le substrat de l'étape (1) est un substrat métallique revêtu avec une couche de vernis pour électrodéposition durcie et toutes les couches appliquées sur la couche de vernis pour électrodéposition sont durcies ensemble.

13. Procédé selon la revendication 11, **caractérisé en ce que** le substrat de l'étape (1) est un vernissage multicouche qui présente des défauts.

14. Procédé selon la revendication 13, **caractérisé en ce que** le vernissage multicouche qui présente des défauts est un qui a été fabriqué par le procédé selon la revendication 11, puis sur lequel des défauts ont été formés par des effets mécaniques extérieurs.

15. Vernissage multicouche, pouvant être fabriqué par le procédé selon l'une quelconque des revendications 11 à 14.
